(19) Europäisches Patentamt
European Patent Office
Office européen des brevets

(11) Numéro de publication: **0 201 417 B1**

(12) **FASCICULE DE BREVET EUROPEEN**

(45) Date de publication du fascicule du brevet: **14.09.88**

(51) Int. Cl.⁴: **B 01 F 17/00,** A 01 N 25/30

(21) Numéro de dépôt: **86400949.3**

(22) Date de dépôt: **30.04.86**

(54) **Nouvelle composition tensio-active, son procédé d'obtention et ses applications.**

(30) Priorité: **06.05.85 FR 8506827**

(43) Date de publication de la demande: **12.11.86 Bulletin 86/46**

(45) Mention de la délivrance du brevet: **14.09.88 Bulletin 88/37**

(84) Etats contractants désignés: **BE CH DE FR GB IT LI LU NL**

(56) Documents cités:
**EP - A - 0 077 233**
**EP - A - 0 099 179**
**EP - A - 0 108 302**
**DE - A - 3 004 185**
**GB - A - 2 019 822**

**DERWENT JAPANES PATENTS REPORT, vol. 75, no. 1, 4 février 1975, page 2, résumé no. A97-C3-D25-G2, Derwent Publications Ltd., Londres, GB; & JP - B - 74049117 (KAO SOAP CO. LTD.) 25-12-1974**

(73) Titulaire: **RHONE-POULENC CHIMIE, 25, quai Paul Doumer, F-92408 Courbevoie Cédex (FR)**

(72) Inventeur: **Girardeau, Yvette, 65 Montée de la Sarra Fontaine Saint Martin, F-69270 - Fontaines/Sur/Saone (FR)**
Inventeur: **Gaudinet, Patrick Résidence Saint-Martin Bat. G, Saint Maurice de Beynost, F-01700 - Miribel (FR)**
Inventeur: **Queuche, Sylvie, 28 rue Gambetta, Résidence Les Voiliers, F-69270 - Fontaines/Sur/Saone (FR)**

(74) Mandataire: **Dutruc-Rosset, Marie-Claude et al, RHONE-POULENC INTERSERVICES Service Brevets Chimie 25, Quai Paul Doumer, F-92408 Courbevoie Cédex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 201 417 B1

ACTORUM AG

## Description

La présente invention a pour objet une nouvelle composition tensio-active, à effet synergique par rapport à ses constituants et son procédé d'obtention. Elle concerne également l'utilisation de ladite composition à la formulation de matières actives sous forme de poudres mouillables ou de granulés. L'invention vise également la dispersion aqueuse ou organique de matières actives obtenues à partir de la poudre mouillable ou des granulés.

Dans de nombreuses applications dans le domaine tel que la phytopharmacie, le bâtiment, la peinture et les industries du papier, du textile et de la cosmétique, on a besoin de préparer des dispersions aqueuses ou organiques de matières actives insolubles ou difficilement solubles dans l'eau et finement divisées. Par la dénomination «matières actives», on entend aussi bien des pigments que des colorants, des azurants optiques, des additifs pour matières plastiques et peintures, des adjuvants pour textiles, des adjuvants pour bétons, des produits cosmétiques, des produits biocides, plus particulièrement les matières actives à applications phytopharmaceutiques telles que les herbicides, les fongicides, les insecticides, les acaricides ou tout autre biocide à activité phytopharmaceutique.

De telles matières actives qui sont utilisées à l'état de suspensions lors de l'application peuvent se présenter sous forme de poudres mouillables ou sous forme de granulés.

Dans de telles formulations, on trouve, le plus souvent, une ou plusieurs matières actives, un ou plusieurs tensio-actifs, des charges et éventuellement des produits auxiliaires.

La matière active intervenant dans la formulation est insoluble dans l'eau ou très difficilement soluble. Elle se présente soit sous forme solide, soit sous forme liquide. Dans un tel cas, il est nécessaire de l'absorber sur un support adéquat.

Cependant, compte-tenu de la diversité des matières actives à caractère hydrophobe prépondérant et de la nature du milieu dispersant, le plus souvent l'eau, la sélection d'un agent tensio-actif adéquat présente une certaine difficulté.

Le choix de l'agent tensio-actif est rendu difficile par l'existence de nombreux paramètres à respecter.

Pour avoir une bonne formulation de la matière active, le tensio-actif doit avoir aucune incompatibilité avec cette dernière et présenter un bon pouvoir liant et filmogène afin d'obtenir des granulés à très forte teneur en matière active. Ils doivent également assurer la bonne stabilité de la matière active au cours du stockage et tout particulièrement éviter le mottage de la poudre mouillable ou la formation des fines dans les granulés.

Lors de la préparation de la dispersion de la matière active dénommée également «bouillie», le tensio-actif doit avoir un bon pouvoir mouillant afin de mouiller correctement la matière active et un bon pouvoir dispersant de telle sorte que la matière active se disperse bien dans l'eau et que la dispersion obtenue soit homogène et stable pendant au moins le temps d'application sans provoquer de défaut secondaire comme par exemple, la formation de mousses, la floculation pouvant entraîner le bouchage des buses des appareils de pulvérisation et si jamais une décantation devait se produire au cours d'un stockage fortuit avant l'application, il est intéressant que la matière active se remette très aisément en dispersion.

Enfin lors de l'utilisation et plus particulièrement dans le cas de l'application phytopharmaceutique, le tensio-actif peut aider à la meilleure disponibilité de la matière active: meilleure mouillabilité des parties de la plante devant être traitées, meilleure pénétration dans le végétal.

Il ressort nettement de ce qui précède qu'il est très difficile de trouver un tensio-actif ou un système tensio-actif qui satisfasse à tous les impératifs précités.

Il a été proposé (demande japonaise examinée n° 74/49 116 et brevet anglais n° 2 019 822) de préparer des dispersions aqueuses de matériaux particulaires à l'aide d'un surfactant anionique ou non-ionique et d'un acide polyacrylique.

Il est connu (brevet allemand n° 3 004 185) de disperser dans l'eau des matériaux polymères à l'aide de sels d'acides sulfoniques du type hydroxy (di styrylphenoxy polyoxyéthylène) propylsulfonate de sodium.

Le prevet européen n° 99 179 propose de préparer des dispersions de particules organiques à l'aide d'un copolymère dérivé d'un monomère hydrophobe (ester acrylique ou vinylique à longue chaine) et d'un monomère hydrophile (acide acrylique).

Des poudres mouillables peuvent être obtenues (brevet européen n° 77 233) à l'aide d'un agent dispersant du type lignosulfonate et d'un tensio-actif du type ester phosphorique d'alcool en $C_2$-$C_{10}$.
Il est connu (brevet européen n° 108 302) de préparer des suspensions aqueuses de charbon à l'aide d'un aralkylpolyalkylène-glycolether.

Le brevet français 2 397 444 enseigne que pour préparer des dispersions stables et concentrées de matières actives sous forme de poudres non pulvérulentes ou de granulés, il faut fragmenter la matière active en présence d'un sel d'une résine acide telle que, par exemple, un copolymère d'anhydrique maléique et d'un composé α-oléfinique; ajouter un solvant organique formant avec le milieu aqueux un système biphasé; traiter le système biphasé formé en additionnant une substance support; puis, isoler le produit par diminution du volume de la phase organique par addition d'eau, le solvant passant peu à peu dans l'eau ajoutée.

La demanderesse a trouvé que l'emploi d'une résine acide telle que définie ne donnait pas entièrement satisfaction, surtout lors de la mise en oeuvre de matières actives difficiles à formuler car les propriétés de dispersabilitéé sont insuffisantes et l'on constate une floculation et/ou une décantation entre le moment de la fabrication de la bouillie et son application dans le domaine technique considéré.

Il était donc hautement souhaitable de pouvoir disposer d'un système tensio-actif qui permette de conduire au départ de matières premières les plus variées possibles à des suspensions stables et homogènes quel que soit le degré de dilution.

La présente invention a précisément pour objet

une nouvelle composition tensio-active caractérisée par le fait qu'elle comprend:

— un tensio-actif (a) constitué par au moins un copolymère obtenu à partir:

. d'un acide carboxylique insaturé ou l'un de ses dérivés de formule (I):

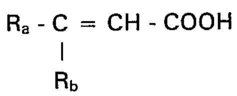 (I)

dans laquelle

$R_a$ est un atome d'hydrogène ou un radical alcoyle ayant de 1 à 10 atomes de carbone et éventuellement porteur d'un groupement -COOH et

$R_b$ est un atome d'hydrogène ou un groupement -COOH

. et d'un composé α-oléfinique répondant à la formule (II) et/ou un composé vinylique de formule (III):

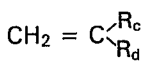 (II)

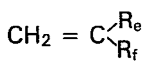 (III)

dans lesquelles

$R_c$ représente un atome d'hydrogène ou un radical alcoyle linéaire ou ramifié ayant de 1 à 4 atomes de carbone

$R_d$ représente un atome d'hydrogène, un radical alcoyle linéaire ou ramifié ayant de 1 à 12 atomes de carbone, ou un radical alcenyle linéaire ou ramifié ayant de 1 à 6 atomes de carbone

$R_e$ représente un atome d'hydrogène ou un radical alcoyle ayant de 1 à 4 atomes de carbone et

$R_f$ représente l'un des groupements suivants:

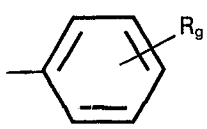

$R_g$ représentant un atome d'hydrogène ou un ou plusieurs radicaux alcoyle ayant de 1 à 4 atomes de carbone

— Cl

— $OOC\text{-}R_h$

$R_h$ étant un radical alcoyle ayant de 1 à 8 atomes de carbone

— $O\text{-}R_i$

$R_i$ ayant la même signification que $R_h$

— COOH

— $COO\text{-}R_j$

$R_j$ ayant la même signification que $R_h$

— $CO\text{-}NH_2$

— $C{\equiv}N$

— Cl quand $R_e$ est un atome d'hydrogene

— un tensio-actif (b) constitué par au moins un sulfate mixte de formule (IV) et/ou un ester phosphorique de formule (V):

$$R_1 \text{-}\!\!(O - R)_n\text{-}\ O\,SO_3\,M \qquad (IV)$$

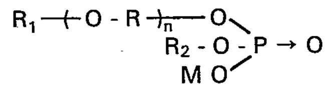 (V)

dans lesquelles

— n est compris entre 1 et 80

— M est un reste d'origine minérale ou organique choisi de manière à avoir la solubilité désirée ou un atome d'hydrogène

— R est un radical alcoylène ayant de 2 à 4 atomes de carbone

— $R_2$ est:

. soit un reste M: les deux restes M (quand $R_2$ = M) pouvant être identiques ou différents

. soit l'un des radicaux $R_1\text{-}\!(O - R)_n\text{-}$ : les radicaux $R_2$ et $R_1\text{-}\!(O - R)_n\text{-}$ pouvant être identiques ou différents et

— $R_1$ représente l'un des radicaux symbolisé par la formule (VI):

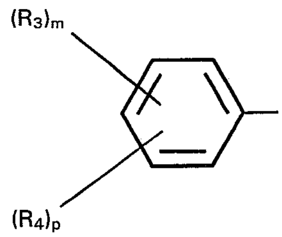 (VI)

dans la formule (VI), m est un nombre entier égal à 1, 2, 3; p est un nombre entier égal à 1 ou 2; $R_4$ représente un atome d'hydrogène ou un radical alcoyle ayant de 1 à 4 atomes de carbone et le radical $R_3$ symbolise un radical de formule (VII):

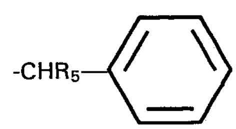 (VII)

dans laquelle

$R_5$ représente un atome d'hydrogène, un radical alcoyle ayant de 1 à 4 atomes de carbone ou un radical phényle.

Le copolymère intervenant en tant que tensio-actif (a) dans la composition de l'invention et dénommé de manière simplifiée copolymère (a) est un produit connu et décrit dans la littérature.

Comme monomères de départ couramment utilisés pour la préparation du copolymère (a), on peut faire appel en tant que:

— acide carboxylique ou dérivé: l'acide maléique ou l'acide fumarique ou leurs dérivés tels qu'esters, hémiesters; l'acide itaconique, l'acide citraconique; l'anhydride maléique; les acides mono- et dialcoylmaléiques et les acides mono- et dialcoylfumariques: le radical alcoyle ayant de 1 à 4 atomes de carbone

— composé α-oléfinique: on choisit de préférence, un hydrocarbure insaturé à chaîne droite ou ramifiée contenant de 2 à 8 atomes de carbone. On peut citer: l'éthylène, le propylène, le butène-1, l'isobutylène, le n-pentène-1, l'isoprène, le méthyl-2 butène-1, le n-hexène-1, le méthyl-2 pentène-1, le méthyl-4 pentène-1, l'éthyl-2 butène-1, le triméthyl-2,4,4 pentène-1 appelé diisobutylène, le butadiène--1,3, le pentadiène-1,3, l'hexadiène-1,3, l'octadiène-1,3, le méthyl-2 diméthyl-3,3 pentène-1, le méthyl-2 diméthyl-4,4 pentène-1

— composé vinylique: le styrène, le chlorure de vinyle, les esters vinyliques d'acides aliphatiques ayant de 1 à 8 atomes de carbone tels que l'acétate de vinyle, le propionate de vinyle, le butyrate de vinyle, les éthers vinyliques tels que l'oxyde de méthyle et de vinyle, l'acide acrylique ou méthacrylique, et leurs esters d'alcoyle contenant de 1 à 8 atomes de carbone, tels que l'acrylate de méthyle, d'éthyle ou de butyle, le méthacrylate de méthyle, d'éthyle ou de butyle, l'acrylamide, le méthacrylamide, l'acrylonitrile, le méthacrylonitrile.

Le copolymère de l'anhydride maléique avec le diisobutylène constitue une matière première de choix.

La proportion des monomères à mettre en jeu est telle que le rapport molaire acide carboxylique insaturé de formule (I) / composés insaturés de formule (II) et/ou (III) est voisin de 1, de préférence égal à 1.

Les copolymères (a) préférés sont ceux qui ont une masse moléculaire moyenne en poids comprise entre 500 et 50 000 et préférentiellement entre 500 et 15 000.

Ils sont obtenus par polymérisation radicalaire dans un solvant tel que par exemple le benzène, le toluène, le xylène, le dioxane, l'acétate d'éthyle ou éventuellement le composé α-oléfinique ou vinylique utilisé en larges excès.

Les catalyseurs générateurs de radicaux libres convenant à l'invention sont le plus souvent des peroxydes ou hydroperoxydes ou des composés azo tels que par exemple, le peroxyde d'acétyle, le peroxyde de di-tert-butyle, le peroxyde de benzoyle, le peroxyde de lauroyle, le perbenzoate de tert-butyle, l'hydroperoxyde de méthyle, l'hydroperoxyde d'éthyle, l'hydroperoxyde de tert-butyle, l'hydroperoxyde de cumène, l'azodiisobutyronitrile et l'azoisobutyrate de diméthyle.

On peut employer le catalyseur à raison de 0,3 à 5% du poids de monomères engagés.

La température de polymérisation est choisie préférentiellement entre 60°C et le point d'ébullition du milieu réactionnel.

Le copolymère (a) est obtenu en solution organique. Il peut être éventuellement neutralisé par addition d'une base jusqu'à obtention d'un pH compris entre 8 et 12. Comme base susceptible d'être utilisée on peut citer la soude, la potasse, la chaux, l'ammoniac, l'ammoniaque, un hydroxyde d'ammonium quaternaire par exemple, l'hydroxyde de triméthylbenzylammonium.

Le copolymère (a) éventuellement neutralisé est transféré en solution aqueuse par addition d'eau, puis distillation du solvant organique.

La solution aqueuse de copolymère (a) peut contenir jusqu'à 25% en poids de matières sèches.

Une autre présentation du tensio-actif (a) est la forme poudre. On peut, par exemple, effectuer le séchage dans un tour d'atomisation en pulvérisant la solution aqueuse précedemment obtenue dans un courant d'air dont la température d'entrée est comprise entre 140 et 240°C.

Comme tensio-actifs (a) disponibles dans le commerce, on peut faire appel au copolymère anhydride maléique-diisobutylène vendu par les Sociétés RHONE-POULENC ou GERONAZZO sous les dénominations commerciales SOPROPON T 36®, SOPROPON T 36 K® ou GEROPON TA 72®.

On ne sortira pas du cadre de l'invention à utiliser un mélange de tensio-actifs (a).

S'agissant du tensio-actif (b), on peut faire appel de préférence aux composés de formule (IV) et (V) dans lesquelles:

— n est compris entre 1 et 40

— M est un reste d'ammonium, un atome de métal alcalin ou un atome d'hydrogène

où dans ce qui précède, on entend par reste d'ammonium un composé de formule N ($R_6$ $R_7$ $R_8$ $R_9$) dans laquelle $R_6$ est un atome d'hydrogène et $R_7$, $R_8$ et $R_9$ identiques ou différents représentent l'hydrogène, des radicaux alcoyles ou des radicaux hydroxyalcoyles, deux des radicaux alcoyles pouvant former ensemble un radical unique divalent contenant éventuellement un atome d'oxygène: le nombre total d'atomes de carbone du reste d'ammonium étant inférieur ou égal à 6

— R représente un radical éthylène

— $R_1$ représente un radical de formule (VI) dans laquelle m est un nombre égal à 2 ou 3; $R_4$ est un atome d'hydrogène; le radical $R_3$ un radical de formule (VII):

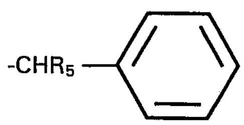

(VII)

dans laquelle $R_5$ symbolise un atome d'hydrogène, un radical méthylene ou phényle et

— $R_2$ est:

. soit un reste M: les deux restes M étant identiques quand $R_2$ = M

. soit un radical $R_1 \!-\!\!(O - CH_2 - CH_2)_n\!-$ : les radicaux $R_2$ et $R_1 \!-\!\!(O - CH_2 - CH_2)_n\!-$ étant identiques.

Dans ce groupe préféré d'agents tensio-actifs (b), conviennent tout particulièrement bien à l'invention, les agents tensio-actifs de formule (IV) et (V) dans lesquelles:

— n est compris entre 3 et 4

— M est un atome de sodium, de potassium, un radical ammonium, une monoéthanolamine, une diéthanolamine, une triéthanolamine ou un atome d'hydrogène

— R est un radical éthylène

— $R_1$ représente un radical de formule (VI) dans laquelle m est un nombre égal à 2 ou 3; $R_4$ est un atome d'hydrogène; le radical $R_3$ est un radical de formule:

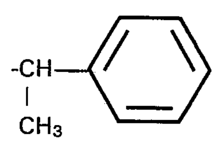

et

— $R_2$ est:

et

— $R_2$ est:

. soit un reste M: les deux restes M étant identiques quand $R_2 = M$

. soit un radical $R_1-(O-CH_2-CH_2)_n-$: les radicaux $R_2$ et $R_1-(O-CH_2-CH_2)_n-$ étant identiques.

Les agents tensio-actifs choisis préférentiellement sont les suivants:

A — les sulfates de tri-(phényl-1 éthyl)phénols polyoxyéthylénés ayant 10 à 40 moles d'oxyde d'éthylène (O.E.) par mole de phénol, sous forme acide ou neutralisée

B — les sulfates de di-(phényl-1 éthyl)phénols polyoxyéthylénés ayant 3 à 20 moles d'oxyde d'éthylène par mole de phénol, sous forme acide ou neutralisée

C — les phosphates de tri-(phényl-1 éthyl)phénols polyoxyéthylénés ayant 10 à 40 moles d'oxyde d'éthylène par mole de phénol, sous forme acide ou neutralisée

D — les phosphates de di-(phényl-1 éthyl)phénols polyéthylénés ayant 3 à 20 moles d'oxyde d'éthylène par mole de phénol, sous forme acide ou neutralisée.

Les différents tensio-actifs précités sont des produits connus et disponibles dans le commerce. Ils sont commercialisés par la Société RHONE-POULENC sous la dénomination respective:

A — SOPROPHOR 4 D 384® (16 O.E. forme acide)

B — SOPROPHOR DSS 5® (5 O.E.), DSS 7® (7 O.E.), DSS 11® (11 O.E.), DSS 15® (15 O.E.) (forme acide ou neutralisée)

C — SOPROPHOR 3 D 33® (16 O.E. forme acide) FL® (15 O.E. forme neutralisée)

D — SOPROPHOR 10 D 12/5® (5 O.E.), 10 D 12/7® (7 O.E.), 10 D 12/11® (11 O.E.), 10 D 12/15® (15 O.E.) (forme acide ou neutralisée).

Il doit être bien entendu que l'on peut utiliser les sulfates de formule (IV) séparément ou en mélange. Les phosphates de formule (V) peuvent être utilisés séparément ou plus généralement sous forme de mélanges de monoester avec le diester correspondant.

On peut très bien utiliser encore, comme tensioactif (b), un mélange de sulfate(s) de formule (IV) et de phosphate(s) de formule (V).

Les compositions tensio-actives de la présente invention peuvent être préparées par différents procédés selon qu'elles se présentent sous une forme liquide ou sous une forme solide.

Un des procédés de préparation de la composition tensio-active de l'invention sous forme liquide consiste à réchauffer le tensio-actif (b), et à procéder au mélange du tensio-actif (b) et de la solution aqueuse du tensio-actif (a).

Dans une première étape, on réchauffe le tensioactif (b) à une température comprise entre 40°C et 60°C. Il est préférable de choisir une température inférieure à 60°C.

Dans le tensio-actif (b) fondu, on introduit la solution de tensio-actif (a) ou inversement. L'operation de mélange s'effectue donc à chaud et sous agitation réalisée à l'aide de moyens classiques d'agitation (hélice, cadre ...).

Une autre présentation de la composition de l'invention est sous forme de poudre. Divers modes de préparation sont possibles.

On peut effectuer le séchage par exemple dans une tour d'atomisation en pulvérisant la solution aqueuse précédemment obtenue dans un courant d'air dont la température d'entrée est comprise entre 140°C à 240°C.

On peut également atomiser uniquement la solution de tensio-actif (a) et procéder ensuite au mélange de la poudre obtenue avec le tensio-actif (b) absorbé sur un support compatible avec l'application finale.

Dans tous les cas, on recueille le produit sous forme de poudre parfaitement stable au stockage et bien adapté pour certaines applications.

Les quantités respectives de deux constituants (a) et (b) exprimées en poids de matières sèches dans les compositions de l'invention peuvent varier dans de larges limites.

Elles peuvent contenir:

— de 10 à 90% en poids d'un ou des tensio-actifs (a)

— de 90 à 10% en poids d'un ou des tensio-actifs (b).

Plus précisément, les proportions des tensio-actifs (a) et (b) dépendent de la destination de la composition tensio-active et de ses qualités recherchées.

Pour obtenir une composition tensio-active à caractère essentiellement mouillant on choisit de préférence:

— de 10 à 30% en poids d'un ou des tensio-actifs (a)

— de 70 à 90% en poids d'un ou des tensio-actifs (b).

Afin d'avoir une composition tensio-active à caractères liant et/ou dispersant prépondérant, on met en oeuvre de préférence:

— de 80 à 90% en poids d'un ou des tensio-actifs (a)

— de 10 à 20% en poids d'un ou des tensio-actifs (b).

La composition tensio-active de l'invention est particulièrement bien adaptée à la formulation de matières actives nécessitant une mise en suspension lors de son application.

La ou les matières actives doivent, comme mentionné, être insolubles dans l'eau ou difficilement solubles dans l'eau à la température ambiante qui est le plus souvent comprise entre 15 et 25°C.

Par l'expression «difficilement soluble», on entend une solubilité inférieure à 1% en poids.

A titre de matières actives susceptibles d'être formulées selon l'invention, on peut citer les pigments et charges, les colorants, les azurants optiques ou divers additifs dans diverses industries tels que les matières plastiques, les peintures, le textile, le béton, la cosmétique etc.

Un domaine privilégié d'application de l'invention est la phytopharmacie et plus spécialement la formulation des matières actives telles que les insecticides et acaricides, les fongicides et leurs diverses associations, les herbicides, les nématicides, les attractifs, les répulsifs, les rodenticides.

Comme exemples d'insecticides et acaricides convenant à l'invention, on peut citer ceux qui appartiennent aux familles:

— des organo-halogénés ou chlorés tels que par exemple le D.D.T. [dichloro diphényl trichloroéthane], le lindane [isomère γ de l'hexachlorocyclohexane], le chlordane [octachlorotétrahydro méthano indène], le toxaphène;

— des carbinols tels que par exemple le dicofol [dichlorophényl trichloroéthanol];

— des organophosporés tels que par exemple le bromophos [O-(bromo-4 dichloro-2,5 phényl) O,O--diméthyl phosphorothioate], le diazinon [O,O-diéthyl O-isopropyl-2 méthyl-6 pyrimidin-4 yl phosphorothioate], le fénitrothion [O,O-diméthyl O-nitro-4 m-tolyl phosphorothioate], le malathion [S-1,2 bis (éthoxycarbonyl)éthyl O,O-diméthyl phosphorodithioate], le parathion [O,O-diéthyl O-nitro-4 phényl phosphorothioate], le trichlorfon [diméthyl trichloro--2,2,2 hydroxy-1 éthyl phosphonate], le diméthoate [O,O-diméthyl S-methylcarbamoylméthyl phosphorodithiotate];

— des sulfones et sulfonates tel que par exemple le tétradifon [tétrachloro diphénylsulfone];

— des carbamates tels que par exemple le carbaryl [N-méthylcarbamate de naphthyle], le méthomyl [N-méthylcarbamate de (méthylthio éthylidène amine)];

— des benzoyl urées tel que par exemple le diflubenzuron [difluoro benzoyl chlorophénylurée];

— les pyrethrinoides de synthèse;

— les acaricides tels que par exemple le cyhéxatin [tricyclohexylhydroxystannane].

Les fongicides susceptibles d'être mis en oeuvre dans l'invention peuvent être choisis parmi:

— les carbamates comme par exemple le bénomyl [butylcarbamoyl benzimidazolyl carbamate de méthyl], le carbendazime [benzimidazoyl carbamate de méthyle], le zirame [diméthyl dithiocarbamate de zinc], le zinèbe [éthylène-bis dithiocarbamate de zinc], le manèbe [éthylène-bis dithiocarbamate de manganèse], le mancozèbe [éthylène-bis dithiocarbamate de zinc et de manganèse], le thirame [disulfure de bis diméthyl-thiocarbamoyle];

— les dérivés du benzène comme par exemple le PCNB [pentachloro nitrobenzène];

— les dérivés du phénol comme par exemple le dinocap [crotonate de (méthylheptyl) dinitrophényl)];

— les quinones comme par exemple le dithianon [dioxodihydro naphto dithiine dicarbonitrile];

— les dicarboximides comme par exemple le captane [trichlorométhylthio tétrahydroisoindolinedione], le folpel [trichlorométhylthio isoindolinedione], l'iprodione [dichlorophényl isopropyl carbamoyl dichlorophénylhydantoïne];

— les amines, amides comme par exemple le bénodanil [iodobenzanilide], le métalaxyl [diméthylphényl méthoxyacétyl alalinate de méthyle];

— les diazines comme par exemple le pyrazophos [thiophosphate d'éthyle et d'éthoxycarbonyl méthyl pyrazolo pyrimidine], le fénarimol [chlorophényl chlorophényl pyrimidine méthanol];

— les sulfamides et dérivés soufrés comme par ecemple le dichlofluanide [dichloro fluoro méthylthiodiméthyl phényl sulfamide];

—les guanidines comme par exemple la doguadine [acétate de dodécylguanidine];

— les hétérocycles comme par exemple l'étridiazole [éthoxy trichlorométhyl thiadiazole], le triadiméfon [chlorophénoxy diméthyltriazol butanone];

— les monoéthyl phosphites métalliques comme par exemple le phoséthyl-Al [tris-O-éthyl phosphonate d'aluminium];

—les organostanniques comme par exemple le fentine-acétate [triphényl étain].

A titre de substances chimiques présentant des propriétés herbicides, on peut faire appel à ceux qui se retrouvent dans les formules chimiques suivantes:

— les composés phénoliques tels que, par exemple le dinosèbe [dinitrobutylphénol];

— les carbamates tel que, par exemple, le phenmédiphame [tolylcarbamoyloxyphényl carbamate de méthyle];

—les urées substituées tels que, par exemple, le néburon [butyl dichlorophényl méthyl urée], le diuron [dichlorophényl diméthyl urée], le linuron [dichlorophényl méthoxyméthyl urée];

— les diazines tels que, par exemple, le bromacil [bromobutyl méthyl uracile], le chlorodiazone [phénylamino chloropyridazone];

— les triazines tels que, par exemple, la simazine [chloro bis-éthylamino s-triazine], l'atrazine [chloroéthylamino isopropylamino s-triazine], la terbuthylazine [chloroéthylamino butylamino s-triazine], le terbuméton [tert-butylamino éthylamino méthoxy triazine], le prométryne [méthylthio bis isopropylamino s-triazine], l'amétryne [méthylthio éthylamino isopropylamino s-triazine], la métribuzine [méthylthio butylamino triazine-one], la cyanazine [chloro éthylamino s-triazine ylamino méthyl propionitrile];

— les amides tels que, par exemple, le napropamide [naphthoxy diéthyl propionamide], le propachlore [isopropyl chloroacétanilide];

— les ammoniums quaternaires;

— les benzonitriles;

— les toluidines tels que, par exemple, l'éthalfluraline [dinitroéthylméthyl propényl trifluoro méthylaniline], l'oryzalin [dinitrodipropyl sulphanilamide];

— les triazoles;

— les dérivés divers tels que, par exemple, le bénazoline [acide chloro oxo benzothiazoline acétique], le diméfuron [chloro oxo tert-butyl oxadiazoline phényl urée], le bromophénoxime [dibromo hydroxy dinitro phényl benzaldoxime], le pyridate [chloro phényl pyridazinyl carbothiolate octyl].

Comme autres exemples de biocides pouvant être utilisés selon l'invention on peut citer les nématicides et les molluscicides.

Il est possible de mettre en oeuvre une ou plusieurs matières actives appartenant à la même classe de biocides ou à une classe différente.

Une application préférentielle de la composition tensio-active de l'invention réside dans son utilisation pour la formulation des matières actives précitées sous forme de poudres mouillables ou de granulés.

Les poudres mouillables réalisées selon l'invention sont composées généralement de:

— au moins une matière active

— au moins la composition tensio-active de l'invention

— éventuellement une charge

— et éventuellement des produits auxiliaires.

La matière active dont la nature a été précisée précédemment se trouve sous forme solide ou liquide.

La matière active solide est le plus souvent soumise à un broyage afin de l'amener à la granulométrie souhaitée qui est telle que 95% en poids des particules ont un diamètre apparent inférieur à 20 µm et que le diamètre moyen est compris entre 2 et 10 µm. On définit le diamètre moyen comme étant un diamètre tel que 50% en poids des particules ont un diamètre supérieur ou inférieur au diamètre moyen.

Il faut tenir compte du point de fusion pour le choix du procédé de broyage: le broyage à jet d'air étant préférable dans le cas des matières actives à bas point de fusion (< 150°C). Ce point de fusion a également une influence sur la concentration possible en matières actives. Celle-ci peut être d'autant plus élevée que le point de fusion est haut.

Si la matière active se trouve à l'état liquide, il est tout-à-fait possible de l'absorber sur support pulvérulent pour avoir une présentation solide.

On choisit de préférence des silices précipitées à haut pouvoir absorbant (par exemple le ZEOSIL 39 A® de R.P.) mises en quantité suffisante pour obtenir une poudre sèche ou bien des silicates de calcium.

La composition tensio-active est sous forme solide ou liquide. Dans ce cas, elle peut être également absorbée sur support.

Les charges sont des composés inertes qui peuvent servir:

— soit de support de la matière active et de la composition tensio-active de l'invention si elles sont liquides

— soit d'agent de dilution de la matière active.

Ce sont des produits naturels broyés tels que kaolin, attapulgite, bentonite, craie, talc ou des produits synthétiques comme la silice de précipitation, de combustion, le carbonate de calcium etc.

Pour le choix des charges on devra tenir compte des caractéristiques suivantes:

. finesse: cette caractéristique a une très grande influence sur la teneur en suspension et la fluence;

. pH: il est important que le pH de la charge soit adapté à la matière active dont la stabilité est souvent dépendante de ce facteur;

. teneur en eau libre: il y a le plus souvent intérêt à ce que cette teneur soit la plus faible possible, la dégradation des matières actives étant généralement favorisée par la présence d'eau;

. propriété antimottante: cette propriété est particulièrement importante pour les poudres mouillables à haute concentration ou obtenues à partir de matières actives à bas point de fusion;

. prix: ce facteur est évidemment d'autant plus important que la formule est moins concentrée en matières actives.

Outre la matière active, la composition tensio-active et au moins une charge de dilution, on trouve des produits auxiliaires et plus spécialement:

— des agents anti-moussants destinés à contrôler la formation des mousses lors de la préparation de la bouillie de traitement tels que par exemple les polysiloxanes

— des agents anti-mottants, par exemple, des charges type silice précipitée

— des agents anti-statiques qui peuvent être des sels minéraux comme le chlorure de lithium ou des phosphates organiques tels que des phosphates d'alcools ou d'acides gras notamment le sel de potassium de l'acide tridécylphosphorique

— des agents protecteurs permettant de stabiliser la matière active vis-à-vis de l'oxydation, des rayons UV et des variations de pH (mélange tampon)

— d'autres additifs divers tels que colorants ou adjuvants destinés à modifier l'adhésion de la bouillie du traitement sur le végétal.

Dans le cas de matières actives particulièrement hydrophobes, il est conseillé d'adjoindre un agent mouillant que l'on choisira en fonction de la ou des matières premières actives. On fait appel de préférence à un tensio-actif anionique ou non ionique. Pour le choix de l'agent tensio-actif, on peut se reporter, entre autres, à l'encyclopédie «ENCYCLOPEDIA CHEMICAL TECHNOLOGY — Kirk OTHMER — volume 19» ou aux différents ouvrages de la Série Surfactant Sciences Series, Marcel DEKKER Inc — Vol. 1: Nonionic Surfactants de Martin J. SCHICK; Vol. 7: Anionic Surfactants de Warnier M. LINFIELD ou à l'ouvrage de Mc. CUTCHEON'S: Detergents and Emulsifiers — International and North American Edition.

Comme exemples d'agents tensio-actifs anioniques utilisables, on peut citer:

— les savons de métaux alcalins tels que les sels sodiques ou potassiques d'acides gras saturés ou insaturés ayant de 8 à 24 atomes de carbone et de préférence de 14 à 20 ou des dérivés d'acides aminocarboxyliques comme le N-lauryl sarconisate de sodium, le N-acylsarconisate de sodium;

— les sulfonates alcalins tels que les alcoylsulfonates, les arylsulfonates ou les alcoylarylsulfonates; en particulier les alcoylsulfonates tels que par exemple les diesters de l'acide sulfosuccinique comme le diéthylhexylsulfosuccinate de sodium, le dioctylsulfosuccinate de sodium, les alcoylbenzènesulfonates de formule $R'_1$-$C_6H_4$ - $SO_3$ $M'_1$ dans laquelle le radical $R'_1$ est un radical alcoyle linéaire ou ramifié contenant de 8 à 13 atomes de carbone tel que par exemple un radical nonyle, dodécyle, tridécyle et $M'_1$ représente un atome de sodium, de potassium, un radical ammonium, la diéthanolamine, la triéthanolamine ou la N-méthylcyclohexylamine; les alcoylnaphtalènesulfonates de formule

$$(R' -)_{n'_o} C_{10}H_{7-n'_o} - SO_3M'_1$$

dans laquelle $n'_o$ est un nombre variant entre 1 et 3 et le radical R' est un radical alcoyle linéaire ou ramifié contenant de 1 à 4 atomes de carbone tel que par exemple un radical méthyle, isopropyle, isobutyle et $M'_1$ ayant la signification donnée précédemment. D'autres sulfonates peuvent être employés tels que les N-acyl, N-alcoyltaurates de formule

$$R'_2\text{-CO-N}(R''_2)\text{-}CH_2\text{-}CH_2\text{-}SO_3Na$$

où $R_2'$ est un radical alcoyle ayant de 11 à 18 atomes de carbone et $R''_2$ est un radical méthyle, éthyle: comme par exemple le N-oléyl, N-méthyltaurate ou le N-palmitoyl, N-méthyltaurate de sodium: les oléins sulfonées résultant de la sulfonation des coupes d'oléfines linéaires de $C_{14}$ à $C_{18}$;

— les sulfates et les produits sulfatés: parmi les sulfates d'alcoyle répondant à la formule:

$$R_3'\text{- } OSO_3\ M_1'$$

on peut citer ceux où le radical $R_3'$ est un radical lauryle, cétyle, myristyle et $M_1'$ ayant la signification donnée précédemment; les huiles et graisses naturelles sulfatées; le sel disodique de l'acide oléique sulfaté; les alcools gras polyoxyéthylénés et sulfatés de formule:

$$R_4' \!\!-\!\!\!+\! O - CH_2 - CH_2 \!\!+_{\!n_1'}\ OSO_3\ M_1'$$

dans laquelle le radical $R_4'$ est un radical alcoyle contenant de 6 à 16 atomes de carbone tel que par exemple un radical myristyle ou un radical alcoyle linéaire ou ramifié comme par exemple un radical hexyle, octyle, décyle, dodécyle, $n_1'$ est le nombre de moles d'oxyde d'éthylène pouvant varier de 1 à 10 et $M_1'$ ayant la signification donnée précédemment; les alcoylphénols polyoxyéthylénés et sulfatés de formule:

$$R_5' - C_6H_4 \!\!-\!\!\!+\! O\text{-}CH_2 - CH_2 \!\!+_{\!n_2'}\ OSO_3\ M_1'$$

dans laquelle le radical $R_5'$ est un radical alcoyle linéaire ou ramifié contenant de 8 à 13 atomes de carbone tel que par exemple un radical octyle, nonyle, dodécyle, $n_2'$ est le nombre de moles d'oxyde d'éthylène pouvant varier de 1 à 20 et $M_1'$ ayant la signification donnée précédemment;

— les phosphates alcalins: les mono- ou diesters de l'acide orthophosphorique ou l'un de ses sels qui peuvent être représentés pour les phosphates d'alcoyle par la formule:

$$(R_6'O)\ PO\ (OM_2')$$

et pour les phosphates de dialcoyle par la formule:

$$(R_6'O)_2\ PO\ (OM_2')$$

dans lesquelles le radical $R_6'$ est un radical alcoyle linéaire ou ramifié contenant de 6 à 12 atomes de carbone et $M_2'$ représente un atome d'hydrogène, de sodium ou de potassium. A titre d'exemples de radical $R_6'$, on peut citer le n-hexyle, n-octyle, n-éthylhexyle, diméthylhexyle, n-décyle, diméthyloctyle, triméthylheptyle, tri-méthylnonyle; les mono- ou diesters de l'acide orthophosphorique ou l'un de ses sels, polyoxyéthylénés qui peuvent être représentés pour les phosphates d'alcoyle polyoxyéthylénés par la formule:

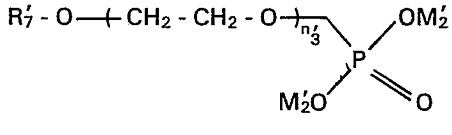

et pour les phosphates de dialcoyle polyoxyéthylénés de formule:

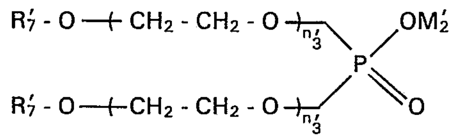

dans lesquelles le radical $R_7'$ représente un radical alcoyle linéaire ou ramifié ayant de 6 à 12 atomes de carbone, un radical phényle, un radical alcoylphényle avec une chaîne alcoyle ayant de 8 à 12 atomes de carbone, $n_3'$ est le nombre d'oxyde d'éthylène pouvant varier de 2 à 20 et $M_2'$ ayant la signification donnée précédemment. Comme exemples de radical $R_7'$, on peut nommer le radical hexyle, octyle, décyle, dodécyle, tridécyle, nonylphényle.

Comme agents tensio-actifs non ioniques, on peut faire appel d'une manière générale à des composés obtenus par condensation d'oxde d'alcoylène avec un composé organique qui peut être aliphatique ou alcoylaromatique. Les tensio-actifs non ioniques appropriés sont:

— les alcoylphénols polyoxyéthylénés par exemple les produits de condensation d'oxyde d'éthylène à raison de 5 à 30 moles par mole d'alcoylphénol, le radical alcoyle étant droit ou ramifié et contenant de 6 à 12 atomes de carbone. On peut citer tout particulièrement le nonylphénol condensé avec environ 10 à 30 moles d'oxyde d'éthylène par mole de phénol, le dinonylphénol condensé avec 15 moles d'oxyde d'éthylène par mole de phénol, le dodécylphénol condensé avec 12 moles d'oxyde d'éthylène par mole de phénol;

— les alcools aliphatiques polyoxyéthylénés résultant de la condensation avec l'oxyde d'éthylène à raison de 3 à 30 moles d'oxyde d'éthylène, d'alcools gras linéaires ou ramifiés contenant de 8 à 22 atomes de carbone: par exemple le produit de condensation d'environ 15 moles d'oxyde d'éthylène avec 1 mole de tridécanol ou d'alcool de coprah, l'alcool myristylique condensé avec 10 moles d'oxyde d'éthylène;

— les amides gras tels que par exemple le diéthanolamide d'acides gras éventuellement polyoxyéthylénés. Comme acides gras, on peut citer l'acide laurique ou de l'huile de coco;

— les dérivés polyoxyéthylénés et polyoxypropylénés: une illustration de ce type de tensio-actifs sont des produits bien connus vendus sous le nom de «PLURONICS»® et «SOPROFOR»®. On les obtient par addition séquentielle d'oxyde de propylène puis d'oxyde d'éthylène sur un composé à hydrogène réactif de bas poids moléculaire tel que par exemple, le propylèneglycol.

D'une manière préférentielle, on choisit les tensio-actifs suivants: les alcoylaryl sulfonates de sodium, les diisopropyl-naphtalène sulfonates de sodium, les allcools gras polyoxyéthylénés et sulfatés, les nonylphénols polyoxyéthylénés.

Les tensio-actifs précités se présentent sous forme solide ou sous forme liquide. Dans ce dernier cas, ils peuvent être également absorbés comme la composition tensio-active de l'invention sur un support pulvérulent.

Les différents constituants précités interviennent

dans les poudres mouillables dans des proportions qui peuvent être variables

- de 10 à 90% de matière(s) active(s)
- de 0,5 à 20% de la composition tensio-active de l'invention
- de 9,5 à 75% de charge(s)
- de 0 à 5% d'agent(s) mouillant(s)
- de 0 à 5% de produit(s) auxiliaire(s).

Le mode de fabrication des poudres mouillables diffère selon que la matière active est solide ou liquide.

Lorsque la matière active est solide, on va la mélanger avec les autres constituants tels que composition tensio-active de l'invention, agent mouillant que l'on absorbera préalablement sur une charge absorbante s'ils sont liquides.

On peut ajouter dans le mélange une charge de dilution et éventuellement des produits auxiliaires. Les différents constituants peuvent être ajoutés simultanément ou consécutivement, il n'y a aucun ordre critique.

La durée du mélange est fonction de l'appareil utilisé et sera aisément déterminée par l'homme de métier de telle sorte qu'il obtienne un mélange homogène.

L'opération de mélange peut être effectuée dans un mélangeur à poudres de type connu: mélangeurs à chute libre du type tambour, mélangeurs verticaux ou horizontaux à vis hélocoïdale, mélangeurs planétaires, mélangeurs horizontaux type Lödige etc.

Quand la matière active est liquide, on effectue sa pulvérisation sur une charge absorbante. Il peut être intéressant de chauffer légèrement cette matière active si sa viscosité est élevée à température ambiante.

On ajoute ensuite la composition tensio-active et l'agent mouillant simultanément avec la matière active s'ils sont à l'état liquide, ou après pulvérisation s'ils sont sous forme solide ou absorbés sur charge.

On peut également ajouter une charge de dilution et éventuellement des produits auxiliaires.

On poursuit le mélange jusqu'à ce qu'il soit homogène.

L'appareillage utilisé pour mettre en oeuvre ce mode d'exécution est du même type que les mélangeurs précités.

Les poudres mouillables obtenues en mettant en jeu la composition de l'invention ont une excellente stabilité au stockage.

Un autre mode d'application de la composition tensio-active de l'invention réside dans la formulation de(s) matière(s) active(s) sous forme de granulés.

Ces granulés sont produits par agglomération d'une matière active avec des agents dispersants et liants.

La composition de ces granulés est la suivante:

- au moins une matière active
- au moins la composition tensio-active de l'invention
- éventuellement un agent mouillant
- éventuellement une charge
- éventuellement un agent désintégrant
- et éventuellement des produits auxiliaires.

La nature des constituants a déjà été précisée sauf en ce qui concerne les agents désintégrants qui ont pour fonction d'aider à la libération de la matière active et qui peuvent être la bentonite, les fécules de maïs ou des sels minéraux très solubles, par exemple, le bicarbonate de sodium ou le chlorure de sodium.

Les proportions des différants constituants des granulés sont données ci-après:

- de 10 à 95% de matière(s) active(s)
- de 5 à 20% de la composition tensio-active de l'invention
- de 0 à 75% de charge(s)
- de 0 à 5% d'agent(s) mouillant(s)
- de 0 à 5% d'agent(s) désintégrant(s).

Les granulés de l'invention sont obtenus selon les procédés classiques de granulation:

- le lit fluidisé
- l'atomisation
- la granulation sur plateau tournant
- l'extrusion
- divers procédés d'agglomération.

On donne ci-après différents modes de préparation des granulés illustrant les différentes techniques de granulation, sans aucun caractère limitatif.

La préparation de granulés sur lit fluidisé consiste à faire un prémélange de la matière active solide (broyée ou absorbée sur support) avec tout ou partie de la quantité mise en oeuvre de la composition tensio-active de l'invention sous forme solide, éventuellement un agent mouillant, un agent désintégrant, puis à pulvériser sur ledit prémélange une solution aqueuse contenant tout ou partie de la composition tensio-active de l'invention sous forme liquide et éventuellement un agent mouillant liquide.

La matière est maintenue à l'état fluidisé à l'aide d'un courant d'air chaud ascendant de 20 à 80°C.

Le pourcentage d'eau (qui représente le plus souvent 30% à 60% de la charge), la vitesse de pulvérisation et le débit d'air doivent être ajustés pour obtenir les performances optimales.

Lorsque les granulés sont formés, ils peuvent être séchés sur le même équipement à l'aide d'un courant d'air chaud ayant une température inférieure à la température de fusion ou de décomposition de la matière active.

Il est également possible de pulvériser dans le lit fluide une bouillie contenant la matière active broyée, la composition tensio-active et éventuellement l'agent mouillant, tous deux de préférence, sous forme liquide. La bouillie peut contenir de 50 à 75% de matières sèches. Dans ce cas, il est nécessaire de démarrer l'opération avec quelques granulés servant d'amorce, prélevés sur une fabrication antérieure.

La taille des granulés peut varier dans d'assez larges mesures entre 0,1 et 2 mm.

Selon une autre variante de l'invention, les granulés peuvent être préparés par atomisation si la température de fusion de la matière active le permet.

On effectue la pulvérisation dans un courant d'air chaud entre 140°C et 240°C d'une bouillie concentrée contenant la matière active, la composition tensio-active de l'invention, éventuellement l'agent mouillant, l'agent désintégrant et des adjuvants divers si nécessaire. La bouillie est concentrée (son extrait sec est de 50 à 70%) et présente une viscosité située entre 300 et 1000 mPa.s.

On conduit l'atomisation par pulvérisation en grosses gouttes en utilisant de préférence des buses bifluides.

En fin d'atomisation, on obtient en général un produit sec.

Si ce n'est pas le cas, on peut effectuer un séchage complémentaire par tout moyen approprié, séchage à l'air ou sous pression réduite réalisée, par exemple, dans une étuve, ou séchage en lit fluide etc.

La taille des granulés obtenus varie généralement entre 100 et 500 µm.

Un autre mode d'exécution de l'invention consiste à agglomérer la matière active sur un plateau tournant.

On charge sur le plateau tornant les matières solides tels que matière active, composition tensioactive de l'invention, charge, produits auxiliaires etc. et l'on homogénéise le mélange desdits produits par rotation du plateau.

On effectue pour agglomérer la matière active une pulvérisation d'eau éventuellement additionnée d'un agent mouillant ou d'une fraction de la composition tensio-active de l'invention sous forme liquide.

Le pourcentage d'eau varie en général entre 7 et 15%.

Les granulés ainsi obtenus doivent être séchés dans une deuxième étape jusqu'à une teneur en eau de 0,3 à 1% suivant la matière active.

L'opération de séchage est réalisée à une température inférieure à la température de fusion ou de décomposition de la matière active. Elle peut être effectuée à l'air ou sous pression réduite tel que précédemment décrit.

La forme des granulés est plus ou moins sphérique et leur taille varie entre 100 et 500 µm.

Une mise en pratique différente de l'invention consiste également à granuler la matière active selon un procédé d'extrusion.

Dans une première étape, généralement on effectue un mélange poudre à poudre, de la matière active broyée ou sur support, de la composition tensio-active de l'invention sous forme solide, des charges et autres additifs sous forme solide.

On humidifie le mélange obtenu par addition de 10 à 30% en poids d'eau. L'adjonction d'eau peut se faire par pulvérisation. On peut également y ajouter un agent mouillant ou tout ou partie de la composition tensio-active de l'invention sous forme liquide.

Le mélange des constituants est effectué dans un mélangeur à poudres de type connu tel que précité.

On réalise ensuite l'extrusion de la pâte obtenue effectuée généralement dans un équipement travaillant à faible pression.

Après extrusion, les granulés doivent être séchés.

Le séchage ne requiert aucune caractéristique particulière.

On ne sortira pas du cadre de l'invention à réaliser la granulation selon d'autres techniques.

On peut réaliser l'agglomération selon d'autres procédés qui consistent à effectuer une pulvérisation d'eau sur un mélange sec de matière active, de la composition tensio-active de l'invention, des charges et d'additifs divers.

On maintient le mélange en mouvement par un moyen mécanique. On peut faire appel à différentes formes de chambres et de systèmes d'agitation. On peut utiliser un mélangeur SCHUGI® ou une turbosphère à double enveloppe de la Société MORITZ.

Une autre variante du procédé de l'invention consiste à mettre en oeuvre séparément le tensio-actif (a) et le tensio-actif (b) constituant la composition tensio-active de l'invention: lesdits tensio-actifs (a) et (b) qui se présentent sous forme solide ou liquide peuvent être introduits à différents stades de la formulation et ceci quel que soit le mode d'obtention de la poudre mouillable ou quelle que soit la technique de granulation.

Il peut être intéressant de mettre en oeuvre ce mode de réalisation de l'invention car il permet d'optimiser les performances de la formulation dans le cas de certaines matières actives.

Les poudres mouillables et les granulés qui font intervenir la composition tensio-active de l'invention sont aisément mis en dispersion lors de l'application.

Le milieu de dispersion peut être un solvant organique mais est constitué le plus souvent par l'eau.

La confection de la bouillie de traitement est réalisée simplement par addition de la poudre mouillable ou des granulés au milieu de dispersion qui peut être agité manuellement ou à l'aide d'un moyen classique d'agitation (agitation à ancre, à hélice, à turbine, etc.). Ce type d'agitation est le plus souvent superflu et ne peut avoir d'intérêt que lorsque les quantités de matière active à mettre en jeu sont importantes.

Les poudres mouillables obtenues selon l'invention présentent les qualités suivantes:

— elles sont facilement mouillables
— elles se dispersent facilement
— elles présentent une bonne tenue en suspension
— elles ne moussent pas trop lors de l'utilisation
— elles ne mottent pas au cours du stockage
— elles ne provoquent pas de dégradation de la matière active qui reste stable dans le temps.

Afin de mettre en évidence les bonnes propriétés des poudres mouillables de l'invention, on a effectué les contrôles suivants:

— Mouillabilité: on détermine le temps de mouillage d'une quantité déterminée de poudre selon la méthode décrite dans le CIPAC Handbook p. 967

— Suspensivité: elle est définie comme la quantité de matière active en suspension après un temps donné dans une colonne de liquide d'une hauteur déterminée et elle est exprimée en pourcentage de la quantité de matière active dans la dispersion initiale.

Deux tests peu différents ont été utilisés:

. celui du CIPAC Handbook p. 861

. celui décrit dans FAO SPECIFICATIONS FOR PLANT PROTECTIONS PRODUCTS, édition 1971 (Food and Agriculture Organization of the United Nations)

. celui qui est référencé WHO/SIF/1.$R_4$

— Formation des mousses: le principe du test réalisé conformément à la méthode CIPAC p 955 consiste à mesurer le volume de mousse obtenu

après agitation d'une certaine quantité de poudre introduite dans un volume d'eau déterminé.

Les granulés obtenus selon l'invention présentent les propriétés suivantes:

- très bonne dispersabilité dans l'eau
- bonne résistance à la manipulation sans formation de poussière
- teneur élevée en matière active
- bonne stabilité physico-chimique
- bonne fluence.

Ils présentent par rapport aux poudres mouillables une meilleure dispersabilité, une densité plus élevée et une meilleure sécurité puisqu'il n'y a pas de diffusion de poussières dans l'atmosphère lors de la fabrication et de leur application.

A fin d'évaluer les propriétés des granulés selon l'invention on a effectué les tests suivants:

— masse volumique apparente:

Le poids de 1 $cm^3$ de granulés est déterminé par pesée de 100 $cm^3$ de granulés dans une éprouvette graduée, sans tassement;

— granulométrie:

Elle est déterminée par passage sur une série de tamis normalisés AFNOR, puis par pesée de chaque fraction granulométrique.

Elle est exprimée par le diamètre moyen qui est défini comme étant un diamètre tel que 50% en poids des particules ont un diamètre supérieur ou inférieur au diamètre moyen;

— résistance à l'attrition:

On fait subir aux granulés à tester ayant un diamètre supérieure à 500 µm, un traitement mécanique donné: agitation pendant une heure des granulés contenus dans un flacon à moitié plein.

On procède ensuite à une analyse granulométrique permettant d'évaluer la destruction du granulé.

Après ce test de destruction, on mesure le pourcentage des fines par passage à travers un tamis normalisé AFNOR dont l'ouverture des mailles est de 200 µm et on compare les résultats obtenus avec ceux mesurés avant le test;

— suspensivité:

La suspensivité est mesurée par la méthode CIPAC, comme pour les poudres mouillables ou par la méthode WHO/SIF/1.$R_4$;

— dispersabilité:

Elle peut être testée visuellement en versant quelques granulés dans une éprouvette contenant de l'eau.

Un autre test consiste à mesurer le temps d'écoulement d'une dispersion aqueuse de granulés sur un tamis dont l'ouverture des mailles est de 300 µm.

On prépare un litre d'une dispersion aqueuse à 20 g/l de granulés ayant un diamètre compris entre 200 et 1600 µm.

On verse ladite dispersion dans un entonnoir ayant une hauteur totale de 335 mm, un diamètre de cône égal à 180 mm et une hauteur de cône égale à 180 mm.

On place le tamis dans la partie supérieure de la tige de l'entonnoir à 25 mm du col de d'entonnoir et son diamètre qui est celui du diamètre interne de la tige de l'entonnoir est de 12 mm.

On mesure le temps d'écoulement d'un litre de dispersion. Si l'on note un colmatage, on évalue la quantité de liquide qui a pu s'écouler;

— test de stockage:

La stabilité au stockage est testée dans une étuve à cycles pendant au moins un mois, la température variant de −5°C à +45°C. Les performances sont vérifiées après essais de stockage.

Les exemples qui suivent, illustrent l'invention sans toutefois la limiter. Les pourcentages mentionnées dans les exemples sont exprimés en poids.

*Exemple 1* et *Essais A et B*

*Exemple 1*

On décrit ci-après la préparation d'une poudre mouillable de D.D.T. technique.

A l'aide d'un broyeur à jet d'air, on broie un D.D.T. technique (98% de pureté) jusqu'à obtention d'une poudre dont les particules ont un diamètre moyen de 6 à 7 µm.

On mélange ensuite cette matière active avec la silice et des tensio-actifs dont les caractéristiques sont données ci-après:

— ZEOSIL 39 A®: silice précipité ayant les caractéristiques suivantes:

| | |
|---|---|
| . surface BET: | 90 $m^2/g$ |
| . prise d'huile: | 280 $cm^3$ pour 100 g |
| . diamètre moyen des particules: | 20 µm |
| . densité: | 1,9 |
| . densité apparente: | 0,25 |

— SOPROPON T 36® commercialisé par RHONE-POULENC: copolymère d'anhydride maléique-diisobutylène ayant une masse moléculaire moyenne en poids d'environ 10 000: poudre blanche à 90% de matières sèches ayant une densité non tassée de 0,3 et un pH de 9,5 ± 0,5 en solution à 1%.

— SOPROPHOR DSS 11® commercialisé par RHONE-POULENC qui est un sulfate double d'ammonium et de di-(phényl-1 éthyl)phénol polyoxyéthyléné ayant 7 moles d'oxyde d'éthylène par mole de phénol: liquide visqueux brun.

— GEROPON 401 D® commercialisé par RHONE-POULENC ou GERONAZZO qui est un nonylphénol polyoxyéthyléné avec 8,5 moles d'oxyde d'éthylène absorbé sur silice.

On met en oeuvre les composants précités en quantité telle que l'on obtienne une poudre mouillable ayant la composition suivante:

| | |
|---|---|
| — D.D.T. technique | 75,0 % |
| — silice (ZEOSIL 39 A®) | 22,25% |
| — copolymère anhydride maléique-diisobutylène (SOPROPON T 36®) | 0,5 % |
| — sulfate double d'ammonium et de di-(phényl-1 éthyl)phénol polyoxyéthyléné (SOPROPHOR DSS 11®) | 1,75% |
| — nonylphénol polyoxyéthyléné (GEROPON 401 D®) | 0,5 % |

*Essais A et B*

On effectue à titre de comparaison la préparation de poudre mouillable de D.D.T. technique selon le mode opératoire de l'exemple 1 mais en supprimant

l'un des constituants de la composition tensio-active de l'invention.

* dans l'essai A, la poudre mouillable a la composition suivante:

| | |
|---|---|
| — D.D.T. technique | 75 % |
| — silice (ZEOSIL 39 A®) | 20 % |
| — copolymère anhydride maléique-diisobutylène (SOPROPON T 36®) | 2,5% |
| — nonylphénol polyoxyéthyléné (GEROPON 401 D®) | 2,5% |

* dans l'essai B, la poudre mouillable a la composition suivante:

| | |
|---|---|
| — D.D.T. technique | 75 % |
| — silice (ZEOSIL 39 A®) | 20 % |
| — sulfate double d'ammonium et de di-(phényl-1 éthyl)phénol polyoxyéthyléné (SOPROPHOR DSS 11®) | 2,5% |
| — nonylphénol polyoxyéthyléné (GEROPON 401 D®) | 2,5% |

On soumet la poudre mouillable obtenue selon l'invention (exemple 1) et les poudres mouillables des essais comparatifs, aux différents contrôles définis ci-dessus.

On rassemble les résultats obtenus dans le tableau I.

TABLEAU I

| | Exemple 1 | Essai A | Essai B |
|---|---|---|---|
| Composition des poudres en % | | | |
| — D.D.T. technique | 75,0 | 75,0 | 75,0 |
| — silice (ZEOSIL 39 A®) | 22,25 | 20,00 | 20,0 |
| — copolymère anhydride maléique-diisobutylène (SOPROPON T 36®) | 0,5 | 2,5 | 0 |
| — sulfate double d'ammonium et de di-(phényl-1 ethyl) phénol polyoxyéthyléné (SOPROPHOR DSS 11®) | 1,75 | 0 | 2,5 |
| — nonylphénol polyoxyéthyléné (GEROPON 401 D®) | 0,5 | 2,5 | 2,5 |
| Mouillabilité en secondes | 35,0 | 35,0 | 165 |
| Suspensivité | | | |
| — test FAO en % | 80 | 55 | 13 |
| — test WHO en % | 80 | 65 | 23 |
| Mousses en $cm^3$ | 12 | 13 | 13 |

L'analyse du tableau I amène les commentaires suivantes:

— dans l'essai B, il se produit une floculation de la suspension obtenue,

— la mise en oeuvre de la composition de l'invention permet d'abaisser la quantité totale de tensio-actifs utilisés tout en améliorant la qualité de la formulation.

*Exemple 2* et *Essais C et D*

*Exemple 2*

Dans cet exemple, on prépare des granulés de tributyl technique.

La matière active mise en oeuvre présente une pureté de 97,5% et se trouve sous forme micronisée avec un diamètre moyen de particules voisin de 10 µm.

Dans un granulateur à lit fluide de marque AEROMATIC TYPE STEA 1®, on introduit dans le bol du granulateur:

— 143,6 g de tribunyl technique
— 24,4 g de kaolin
— 16 g d'un copolymère anhydride maléique-diisobutylène (SOPROPON T 36®)
— 10 g de bentonite commercialisée par la Société CECA sous la dénomination CLARSOL FGN FR 4®.

On réalisé l'homogénéisation du mélange à l'aide d'un courant d'air ascendant réglé à fort débit.

On maintient ensuite ce mélange à l'état fluidisé par un courant d'air préchauffé à 30°C.

Sur ce mélange, on pulvérise en 5 minutes:

— 100 g d'eau
— 4 g de dodécylbenzènesulfonate de sodium
— 2 g d'un sulfate double d'ammonium et de di-(phényl-1 éthyl)phénol polyoxyéthyléné ayant 7 moles d'oxyde d'éthylène par mole de phénol (SOPROPHOR DSS 7®).

On décolmate si nécessaire les parois du bol et l'on ajuste le débit de l'air ascendant pour bien maintenir la matière à l'état fluidisé.

Après 6 à 7 minutes d'agitation, la granulation est terminée.

Les granulés sont séchés partiellement dans le bol de granulation. A cet effet, on prérègle la température du courant d'air ascendant à environ 70°C pendant 10 minutes: la température dans le bol est voisine de 50°C.

On termine le séchage par passage à l'étuve à 50°C pendant 12 heures.

On recueille les granulés qui sont ensuite soumis à un tamisage sur une série de tamis normalisés. 90% des granulés ont une taille comprise entre 200 et 1600 µm et sont donc directement utilisables pour l'application.

Les granulés obtenus présentent la composition suivante:

| | |
|---|---|
| — tribunyl technique | 71,8% |
| — copolymère anhydre maléique-diisobutylène (SOPROPON T 36®) | 8,0% |
| — sulfate double d'ammonium et de di- | |

(phényl-1 ethyl)phénol polyoxyéthyléné (SOPROPHOR DSS 7®) 1,0%
— dodécylbenzène sulfonate de sodium 2,0%
— kaolin 12,2%
— bentonite (CLARSOL FGN FR4®) 5,0%

*Essais C et D*

A titre comparatif, on réalise la préparation des granulés de tribunyl selon le opératoire de l'exemple 2 mais en supprimant l'un des constituants de la composition tensio-active de l'invention.

* dans l'essai C, les granulés ont la composition suivante:

— tribunyl technique 71,8%
— copolymère anhydride maléique-diisobutylène (SOPROPON T 36®) 9,0%
— dodécylbenzène sulfonate de sodium 2,0%
— kaolin 12,2%
— bentonite (CLARSOL FGN FR4®) 5,0%

* dans l'essai D, les granulés ont la composition suivante:

— tribunyl technique 71,8%
— sulfate double d'ammonium et de di-(phényl-1 éthyl) phénol polyoxyéthyléné (SOPROPHOR DSS 7®) 9,0%
— dodécylbenzène sulfonate de sodium 2,0%
— kaolin 12,2%
— bentonite (CLARSOL FGN FR4®) 5,0%

Afin de comparer les propriétés de granulés de l'invention (exemple 2) et des granulés des essais comparatifs (essais C et D), on les soumet aux différents tests précédemment décrits.

Les résultats obtenus sont consignés dans le tableau II.

TABLEAU II

| | Exemple 2 | Essai C | Essai D |
|---|---|---|---|
| Composition des granulés (en %) | | | |
| — tribunyl technique | 71,8 | 71,8 | 71,8 |
| — copolymère anhydride maléique-diisobutylène (SOPROPON T 36®) | 8,0 | 9,0 | 0 |
| — sulfate double d'ammonium et de di-(phényl-1 éthyl) phénol polyoxyéthyléné (SOPROPHOR DSS 7®) | 1,0 | 0 | 9,0 |
| — dodécylbenzène sulfonate de sodium | 2,0 | 2,0 | 2,0 |
| — kaolin | 12,2 | 12,2 | 12,2 |
| — bentonite (CLARSOL FGN FR4®) | 5,0 | 5,0 | 5,0 |

TABLEAU II (suite)

| | Exemple 2 | Essai C | Essai D |
|---|---|---|---|
| Masse volumique apparente | 0,8 | 0,8 | 0,8 |
| Résistance à l'attrition | <1% | <1% | <1% |
| Dispersabilité | | | |
| . quantité écoulée | 1000 $cm^3$ | 200 $cm^3$ | 100 $cm^3$ |
| . temps d'écoulement | 12 s | * | * |
| Suspensivité (test WHO) | 90% | 63% | 10% |

* colmatage du filtre

Le tableau II met nettement en évidence l'effet de synergie obtenu par la mise en oeuvre de la composition tensio-active de l'invention dans la formulation d'une matière active sous forme de granulés au niveau de leurs propriétés de dispersabilité et de suspensivité.

*Exemple 3* et *Essai E et F*

*Exemple 3*

On réalise la formulation de phénmediphame sous forme de granulés: ladite matière active est micronisée et présente un diamètre moyen de 6 à 7 µm.

Dans le bol d'un mélangeur-granulateur du type ROWENTA MULTIXER®, on introduit:

— 80 g de phénmediphame
— 8 g d'une composition tensio-active sous forme d'une poudre contenant 7,2 g d'un copolymère anhydride maléique-diisobutylène (SOPROPON T 36®)et 0,8 g d'un sulfate double d'ammonium et de di-(phényl-1 éthyl)phénol polyoxyéthyléné (SOPROPHOR DSS 7®)
— 3 g de bentonite (CLARSOL FGN FR4® ).

On effectue le mélange de ces poudres pendant 3 à 4 minutes puis l'on ajoute rapidement:

— 10 g d'eau
— 2 g de dodécylbenzène sulfonate de sodium.

On maintient sous agitation en décolmatant si nécessaire les parois du bol.

On ajoute ensuite lentement:

— 10 g d'eau.

Après 5 à 6 minutes au total, la granulation est terminée.

On sèche les granulés 12 heures dans une étuve à 50°C.

Les granulés obtenus ont la composition suivante:

— phénmediphame 80 %
— copolymère anhydride maléique-diisobutylène (SOPROPON T 36®) 7,2%

— Sulfonate double d'ammonium et de di-(phényl-1 éthyl)phénol polyoxyéthyléné (SOPROPHOR DSS 7®) 0,8%
— dodécylbenzène sulfonate de sodium 2,0%
— kaolin 7,0%
— bentonite (CLARSOL FGN FR4®) 3 %

*Essais E et F*

On effectue des essais comparatifs de préparation de granulés en n'utilisant que le copolymère anhydride maléique-diisobutylène dans l'essai E et que le sulfate double d'ammonium et de di-(phényl-1 éthyl) phénol polyoxyéthyléné dans l'essai F.

On contrôle la suspensivité obtenue avec les granulés de l'exemple 3 et des essais E et F.

Les résultats sont consignés dans le tableau III.

TABLEAU III

| | Exemple 3 | Essai E | Essai F |
|---|---|---|---|
| Composition des granulés (en %) | | | |
| — phénmediphame | 80 | 80 | 80 |
| — copolymère anhydride maléique-diisobutylène (SOPROPON T 36®) | 7,2 | 8,0 | 0 |
| — sulfate double d'ammonium et de di-(phényl-1 éthyl) phénol polyoxyéthyléné (SOPROPHOR DSS 7®) | 8,0 | 0 | 8,0 |
| — dodécylbenzène sulfonate de sodium | 2,0 | 2,0 | 2,0 |
| — kaolin | 7,0 | 7,0 | 7,0 |
| — bentonite (CLARSOL FGN FR4®) | | | |
| Suspensivité (test WHO) | 87,5 | 77 | 50 |

*Exemple 4* et *Essais G et H*

*Esemple 4*

On prépare des granulés d'atrazine technique (90% de pureté) selon le mode opératoire de l'exemple 3. La composition tensio-active utilisée fait intervenir un copolymère anhydride maléique-diisobutylène (SOPROPON T 36®) et un phosphate de di-(phényl-1 éthyl)phénol polyoxyéthyléné avec 16 moles d'oxyde d'éthylène par mole de phénol et neutralisé à la triéthanolamine.

On effectue à titre de comparaison (essais G et H) la préparation de granulés d'atrazine en supprimant l'un des constituants de la composition tensio-active de l'invention.

La composition des granulés de l'exemple 4 et des essais G et H ainsi que les résultats obtenus au test de suspensivité sont consignés dans le tableau IV.

TABLEAU IV

| | Exemple 4 | Essai G | Essai H |
|---|---|---|---|
| Composition des granulés (en %) | | | |
| — atrazine technique | 92 | 92 | 92 |
| — copolymère anhydride maléique-di-isobutylène (SOPROPON T 36®) | 6 | 7 | 0 |
| — phosphate de di-(phényl-1 éthyl) phénol polyoxyéthyléné et neutralisé (SOPROPHOR FL®) | 1 | 0 | 7 |
| — dodécylbenzène-sulfonate de sodium | 1 | 1 | 1 |
| Suspensivité (test WHO) | 93% | 82% | * |

* granulation impossible

Les granulés obtenus selon l'invention présentent une meilleure suspensivité ce qui met en évidence les bonnes propriétés de dispersabilité de la composition de l'invention.

**Revendications**

1. Composition tensio-active caractérisé par le fait qu'elle comprend:

— un tensio-actif (a) constitué par au moins un copolymère obtenu à partir:

. d'un acide carboxylique insaturé ou l'un de ses dérivés de formule (I):

$$R_a - \underset{\underset{R_b}{|}}{C} = CH - COOH \qquad (I)$$

dans laquelle

$R_a$ est un atome d'hydrogène ou un radical alcoyle ayant de 1 à 10 atomes de carbone et éventuellement porteur d'un groupement -COOH et

$R_b$ est un atome d'hydrogène ou un groupement -COOH

. et d'un composé α-oléfinique répondant à la formule (II) et/ou un composé vinylique de formule (III):

$$CH_2 = C\begin{matrix} \diagup R_c \\ \diagdown R_d \end{matrix} \qquad (II)$$

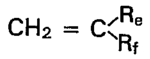 (III)

dans lesquelles

$R_c$ représente un atome d'hydrogène ou un radical alcoyle linéaire ou ramifié ayant de 1 à 4 atomes de carbone

$R_d$ représente un atome d'hydrogène, un radical alcoyle linéaire ou ramifié ayant de 1 à 12 atomes de carbone, ou un radical alcenyle linéaire ou ramifié ayant de 1 à 6 atomes de carbone

$R_e$ représente un atome d'hydrogène ou un radical alcoyle ayant de 1 à 4 atomes de carbone et

$R_f$ représente l'un des groupements suivants:

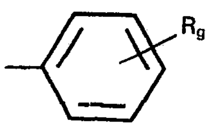

$R_g$ représentant un atome d'hydrogène ou un ou plusieurs radicaux alcoyle ayant de 1 à 4 atomes de carbone

— Cl

— OOC-$R_h$

$R_h$ étant un radical alcoyle ayant de 1 à 8 atomes de carbone

— O-$R_i$

$R_i$ ayant la même signification que $R_h$

— COOH

— COO-$R_j$

$R_j$ ayant la même signification que $R_h$

— CO-$NH_2$

— C≡N

— Cl quand $R_e$ est un atome d'hydrogene

le rapport molaire acide carboxylique insaturé de formule (I)/composés insaturés de formule (II) et/ou (III) étant voisine de 1

— un tensio-actif (b) constitué par au moins un sulfate mixte de formule (IV) et/ou un ester phosphorique de formule (V):

$$R_1 \left( O - R \right)_n O\, SO_3\, M \qquad (IV)$$

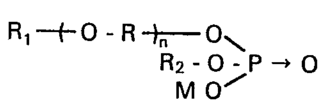 (V)

dans lesquelles

— n est compris entre 1 et 80

— M est un reste d'origine minérale ou organique choisi de manière à avoir la solubilité dérisée ou un atome d'hydrogène

— R est un radical alcoylène ayant de 2 à 4 atomes de carbone

— $R_2$ est:

. soit un reste M: les deux restes M (quand $R_2$ = M) pouvant être identiques ou différents

. soit l'un des radicaux $R_1 \left( O - R \right)_n$ : les radicaux $R_2$ et $R_1 \left( O - R \right)_n$ pouvant être identiques ou différents et

— $R_1$ représente l'un des radicaux symbolisé par la formule (VI):

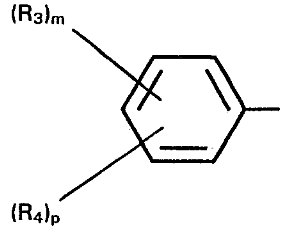 (VI)

dans la formule (VI), m est un nombre entier égal à 1, 2, 3; p est un nombre entier égal à 1 ou 2; $R_4$ représente un atome d'hydrogène ou un radical alcoyle ayant de 1 à 4 atomes de carbone et le radical $R_3$ symbolise un radical de formule (VII)

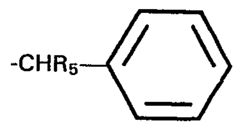 (VII)

dans laquelle

$R_5$ représente un atome d'hydrogène, un radical alcoyle ayant de 1 à 4 atomes de carbone ou un radical phényle.

2. Composition tensio-active selon la revendication caractérisée par le fait que l'acide carboxylique ou dérivé entrant dans la composition du copolymère (a) est l'acide maléique ou l'acide fumarique ou leurs esters ou hémiesters; l'acide itaconique, l'acide citraconique; l'anhydride maléique; les acides mono- et dialcoylmaléiques et les acides mono- et dialcoylfuramiques: le radical alcoyle ayant de 1 à 4 atomes de carbone.

3. Composition tensio-active selon l'une des revendications 1 et 2 caractérisée par le fait que le composé α-oléfinique entrant dans la composition du copolymère (a) est un hydrocarbure insaturé à chaîne droite ou ramifiée contenant de 2 à 8 atomes de carbone.

4. Composition tensio-active selon la revendication 3 caractérisée par le fait que le composé α-oléfinique est l'éthylène, le propylène, le butène-1, l'isobutylène, le n-pentène-1, l'isoprène, le méthyl-2 butène-1, le n-hexène-1, le méthyl-2 pentène-1, le méthyl-4 pentène-1, l'éthyl-2 butène-1, le diisobutylène, le butadiène-1,3, le pentadiène-1,3, l'hexadiène-1,3, l'octadiène-1,3, le méthyl-2 diméthyl-3,3 pentène-1, le méthyl-2 diméthyl-4,4 pentène-1.

5. Composition tensio-active selon l'une des revendications 1 à 4 caractérisée par le fait que le composé vinylique entrant dans la composition du copolymère (a) est le styrène, le chlorure de vinyle, les esters vinyliques d'acides aliphatiques ayant de 1 à 8 atomes de carbone, les éthers vinyliques, l'acide acrylique ou méthacrylique, et leurs esters d'alcoyle contenant de 1 à 8 atomes de carbone, l'acrylamide, le méthacrylamide, l'acrylonitrile, le méthacrylonitrile.

6. Composition tensio-active selon la revendication 1 caractérisée par le fait que le copolymère (a) est un copolymère anhydride maléique-diisobutylène.

7. Composition tensio-active selon l'une des revendications 1 à 6 caractérisée par le fait que le copolymère (a) a une masse moléculaire moyenne en poids comprise entre 500 et 50 000.

8. Composition tensio-active selon la revendication 7 caractérisée par le fait que le copolymère (a) a une masse moléculaire moyenne en poids comprise entre 500 et 15 000.

9. Composition tensio-active selon l'une des revendications 1 à 8 caractérisée par le fait que le rapport molaire acide carboxylique de formule (I)/composés insaturés de formule (II) et/ou (III) est égal à 1.

10. Composition tensio-active selon l'une des revendications 1 à 9 caractérisée par le fait que le tensio-actif (b) est un composé de formule (IV) ou (V) dans lesquelles:

— n est compris entre 1 et 40

— M est un atome d'hydrogène, un atome de métal alcalin ou un reste d'ammonium de formule N ($R_6$ $R_7$ $R_8$ $R_9$) dans laquelle $R_6$ est un atome d'hydrogène et $R_7$, $R_8$ et $R_9$ identiques ou différents représentent l'hydrogène, des radicaux alcoyles ou des radicaux hydroxyalcoyles, deux des radicaux alcoyles pouvant former ensemble un radical unique divalent contenant éventuellement un atome d'oxygène: le nombre total d'atomes de carbone du reste d'ammonium étant inférieur ou égal à 6

— R représente un radical éthylène

— $R_1$ représente un radical de formule (VI) dans laquelle m est un nombre égal à 2 ou 3; $R_4$ est un atome d'hydrogène; le radical $R_3$ un radical de formule (VII)

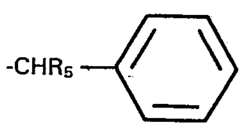

(VII)

dans laquelle

— $R_5$ symbolise un atome d'hydrogène, un radical méthyle ou phényle et

— $R_2$ est:

. soit un reste M: les deux restes M étant identiques quand $R_2$ = M

. soit un radical $R_1 \!-\!\!(O - CH_2\text{-}CH_2)_n\!-$ : les radicaux $R_2$ et $R_1 \!-\!\!(O - CH_2 - CH_2)_n\!-$ étant identiques.

11. Composition tensio-active selon la revendication 10 caractérisée par le fait que le tensio-actif (b) est un composé de formule (IV) ou (V) dans lesquelles:

— n est compris entre 3 et 40

— M est un atome d'hydrogène de sodium, de potassium, un radical ammonium, une monoéthanolamine, une diéthanolamine, une triéthanolamine

— R est un radical éthylène

— $R_1$ représente un radical de formule (VI) dans laquelle m est un nombre égal à 2 ou 3; $R_4$ est un atome d'hydrogène; le radical $R_3$ est un radical de formule:

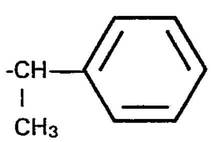

et

— $R_2$ est:

. soit un reste M: les deux restes M étant identiques quand $R_2$ = M

. soit un radical $R_1 \!-\!\!(O - CH_2 - CH_2)_n\!-$ : les radicaux $R_2$ et $R_1 \!-\!\!(O - CH_2\text{-}CH_2)_n\!-$ étant identiques.

12. Composition tensio-active selon l'une des revendications 1 à 11 caractérisée par le fait que le tensio-actif (b) est choisi parmi: les sulfates de tri-(phényl-1 éthyl)phénols polyoxyéthylénés ayant 10 à 40 moles d'oxyde d'éthylène par mole phénol sous forme acide ou neutralisée, les sulfates de di-(phenyl-1 éthyl)phénols polyoxyéthylénés ayant 3 à 20 moles d'oxyde d'éthylène par mole de phénol sous forme acide ou neutralisée, les phosphates de tri-(phenyl-1 éthyl)phénols polyoxyéthylénés ayant 10 à 40 moles d'oxyde d'éthylène par mole de phénol sous forme acide ou neutralisée, les phosphates de di-(phenyl-1 éthyl)phénols polyoxyéthylénés ayant 3 à 20 moles d'oxyde d'éthylène par mole de phénol sous forme acide ou neutralisée.

13. Composition tensio-active selon l'une des revendications 1 à 12 caractérisée par le fait qu'elle contient

— de 10 à 90% en poids d'un ou des tensio-actifs (a)

— de 90 à 10% en poids d'un ou des tensio-actifs (b).

14. Composition tensio-active selon la revendication 13 caractérisée par le fait qu'elle contient

— de 10 à 30% en poids d'un ou des tensio-actifs (a)

— de 70 à 90% en poids d'un ou des tensio-actifs (b).

15. Composition tensio-active selon la revendication 13 caractérisée par le fait qu'elle contient

— de 80 à 90% en poids d'un ou des tensio-actifs (a)

— de 10 à 20% en poids d'un ou des tensio-actifs (b).

16. Composition tensio-active selon l'une des revendications 1 à 15 caractérisée par le fait qu'elle est sous une forme liquide.

17. Composition tensio-active selon l'une des revendications 1 à 15 caractérisée par le fait qu'elle est sous une forme poudre.

18. Procédé de préparation de la composition tensio-active décrite dans l'une des revendications 1 à 15, sous une forme liquide caractérisé par le fait qu'il consiste à réchauffer le tensio-actif (b) et à procéder au mélange du tensio-actif (b) et de la solution aqueuse du tensio-actif (a).

19. Procédé selon la revendication 18 caractérisé par le fait que l'on introduit la solution aqueuse de tensio-actif (a) dans le tensio-actif (b) fondu ou inversement.

20. Procédé de préparation de la composition tensio-active décrite dans l'une des revendications 1 à 15 sous une forme solide caractérisé par le fait qu'il consiste à sécher la solution décrite dans la revendication 16 par pulvérisation dans un courant d'air dont la température est comprise entre 140 et 240°C.

21. Procédé de préparation de la composition tensio-active décrite dans l'une des revendications 1 à 15 sous une forme solide caractérisé par le fait qu'il

consiste à procéder au mélange du tensio-actif (a) séché avec le tensio-actif (b) absorbé sur un support.

22. Utilisation de la composition tensio-active décrite dans l'une des revendications 1 à 17 à la formulation de matière(s) active(s).

23. Utilisation selon la revendication 22 caractérisée par le fait que la ou les matières actives sont des pigments ou charges, des colorants, des azurants optiques, des additifs dans les matières plastiques, les peintures, les textiles, le béton ou ls cosmétique.

24. Utilisation selon la revendication 22 caractérisée par le fait que la ou les matières actives sont des insecticides, des acaricides, des fongicides, des herbicides, des nématicides, des attractifs, des répulsifs, des rodenticides ou tout autre biocide seul ou en mélange.

25. Utilisation selon l'une des revendications 22 à 24 caractérisée par le fait que la ou les matières actives sont formulées sous forme d'une poudre mouillable.

26. Utilisation selon la revendication 25 caractérisée par le fait que la poudre mouillable est composée de:

— au moins une matière active
— au moins la composition tensio-active décrite dans l'une des revendications 1 à 17
— éventuellement une charge
— et éventuellement des produits auxiliaires.

27. Utilisation selon la revendication 26 caractérisée par le fait que la poudre mouillable peut contenir:

— de 10 à 90% de matière(s) avtive(s)
— de 0,5 à 20% de la composition tensio-active décrite dans l'une des revendications 1 à 17
— de 9,5 à 75% de charge(s)
— de 0 à 5% d'agent(s) moullant(s)
— de 0 à 5% de produit(s) auxiliaire(s).

28. Utilisation selon l'une des revendications 22 à 24 caractérisée par le fait que le ou les matières actives sont formulées sous forme de granulés.

29. Utilisation selon la revendication 28 caractérisée par le fait que les granulés sont composés de:

— au moins une matière active
— au moins la composition tensio-active décrite dans l'une des revendications 1 à 17
— éventuellement un agent mouillant
— éventuellement une charge
— éventuellement un agent désintégrant
— et éventuellement des produits auxiliaires.

30. Utilisation selon la revendication 29 caractérisée par le fait que les granulés peuvent contenir:

— de 10 à 95% de matière(s) active(s)
— de 5 à 20% de la composition tensio-active décrite dans l'une des revendications 1 à 17
— de 0 à 75% de charge(s)
— de 0 à 5% d'agent(s) mouillant(s)
— de 0 à 5% d'agent(s) désintégrant(s).

31. Utilisation de la composition tensio-active décrite dans l'une des revendications 1 à 17 à la formulation de ou des matières actives par mise en oeuvre séparément du tensio-actif (a) et du tensio-actif (b) sous forme poudre ou liquide, à différents stades de la formulation qu'elle soit sous forme de poudre mouillable ou de granulés.

32. Suspension de ou des matières actives obtenue par mise en dispersion de la poudre mouillable ou des granulés décrits dans l'une des revendications 25 à 31.

33. Suspension selon la revendication 32 caractérisée par le fait que le milieu de dispersion est l'eau.

**Patentansprüche**

1. Grenzflächenaktives Gemisch, dadurch gekennzeichnet, dass es enthält:

— ein Tensid (a), bestehend aus mindestens einem Copolymer

. einer ungesättigten Carbonsäure oder einem ihrer Derivate der Formel (I):

$$R_a - \underset{\displaystyle R_b}{\underset{|}{C}} = CH - COOH \qquad (I)$$

in der

$R_a$ ein Wasserstoffatom oder ein Alkylradikal mit 1 bis 10 Kohlenstoffatomen ist und eventuell eine COOH-Gruppe enthält

$R_b$ ein Wasserstoffatom oder eine COOH-Gruppe,

. und einem α-Alken der Formel (II) und/oder einer Vinylverbindung der Formel (III)

$$CH_2 = C\begin{matrix} \diagup R_c \\ \diagdown R_d \end{matrix} \qquad (II)$$

$$CH_2 = C\begin{matrix} \diagup R_e \\ \diagdown R_f \end{matrix} \qquad (III)$$

in denen

$R_c$ ein Wasserstoffatom oder ein verzweigtes oder unverzweigtes Alkylradikal mit 1 bis 4 Kohlenstoffatomen,

$R_d$ ein Wasserstoffatom oder ein verzweigtes oder unverzweigtes Alkylradikal mit 1 bis 12 Kohlenstoffatomen oder ein verzweigtes oder unverzweigtes Alkylradikal mit 1 bis 6 Kohlenstoffatomen,

$R_e$ ein Wasserstoffatom oder ein Alkylradikal mit 1 bis 4 Kohlenstoffatomen und

$R_f$ eine der folgenden Gruppen bedeutet:

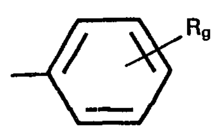

wobei $R_g$ ein Wasserstoffatom oder ein oder mehrere Alkylradikale mit 1 bis 4 Kohlenstoffatomen ist,

— Cl

— OOC-$R_h$, wobei $R_h$ ein Alkylradikal mit 1 bis 8 Kohlenstoffatomen ist,

— O-$R_i$, wobei $R_i$ die gleiche Bedeutung hat, wie $R_h$,

— COOH

— COOR$_j$, wobei $R_j$ die gleiche Bedeutung hat, wie $R_h$,

— $CO\text{-}NH_2$,
— $C{\equiv}N$,
— Cl, wenn $R_e$ ein Wasserstoffatom ist,

wobei das Molverhältnis der ungesättigten Carbonsäure und der ungesättigten Verbindung nach Formel (II) und/oder Formel (III) in der Nähe von 1 liegt,

— und ein Tensid (b), bestehend aus mindestens einem gemischten Sulfat der Formel (IV) und/oder einem Phosphorsäureester der Formel (V):

$$R_1 -\!\!\left(O - R\right)_n\!\!- O\,SO_3\,M \qquad (IV)$$

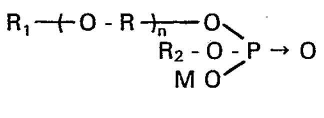
(V)

in denen

— n zwischen 1 und 80 liegt,

— M ein anorganischer oder organischer Rest ist, der derart gewählt wird, dass die gewünschte Löslichkeit erreicht wird, oder ein Wasserstoffatom,

— R ein Alkylradikal mit 2 bis 4 Kohlenstoffatomen ist,

— $R_2$ entweder ein Rest der Art von M ist, wobei die zwei Reste M (im Falle $R_2$ = M) gleich oder verschieden sein können, oder eines der Radikale $R_1 -\!(O - R)_n\!-$, wobei die Radikale $R_2$ und $R_1 -\!(O - R)_n\!-$ gleich oder verschieden sein können, und

— $R_1$ ein Radikal der Formel (VI) ist,

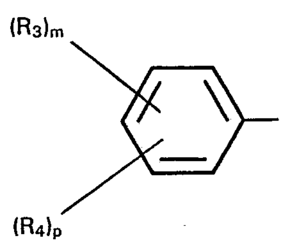
(VI)

in der m eine ganze Zahl und gleich 1, 2 oder 3 ist, p eine ganze Zahl und gleich 1 oder 2, $R_4$ ein Wasserstoffatom oder ein Alkylradikal mit 1 bis 4 Kohlenstoffatomen und $R_3$ ein Radikal mit der Formel (VII)

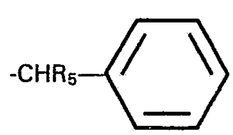
(VII)

in der $R_5$ ein Wasserstoffatom, ein Alkylradikal mit 1 bis 4 Kohlenstoffatomen oder ein Phenylradikal darstellt.

2. Grenzflächenaktives Gemisch nach Patentanspruch 1, dadurch gekennzeichnet, dass die Carbonsäure oder das Derivat im Copolymer (a) Malein- oder Fumarsäure oder deren Ester oder Halbester; Itaconsäure; Citraconsäure; Maleinsäureanhydrid; die Mono- oder Dialkylmalein- oder -fumarsäuren mit 1 bis 4 Kohlenstoffatomen im Alkylrest ist.

3. Grenzflächenaktives Gemisch nach Patentanspruch 1 oder 2, dadurch gekennzeichnet, dass das α-Alken im Copolymer (a) ein ungesättigter Kohlenwasserstoff mit gerader oder verzweigter Kette mit 2 bis 8 Kohlenstoffatomen ist.

4. Grenzflächenaktives Gemisch nach Patentanspruch 3, dadurch gekennzeichnet, dass das α-Alken Ethylen, Propylen, 1-Buten, Isobutylen, n-1-Penten, Isopren, 2-Methyl-1-buten, n-1-Hexen, 2-Methyl-1-penten, 4-Methyl-1-penten, 2-Ethyl-1-buten, Diisobutylen, 1,3-Butadien, 1,3-Pentadien, 1,3-Hexadien, 1,3-Octadien, 2-Methyl-3,3-dimethyl-1-penten, 2-Methyl-4,4-dimethyl-1-penten ist.

5. Grenzflächenaktives Gemisch nach einem der Patentansprüche 1 bis 4, dadurch gekennzeichnet, dass die Vinylverbindung im Copolymer (a) Styrol, Vinylchlorid, ein Vinylester aliphatischer Säuren mit 1 bis 8 Kohlenstoffatomen, ein Vinylether, Acrylsäure oder Methacrylsäure oder eines ihrer Alkylester mit 1 bis 8 Kohlenstoffatomen, Acrylamid, Methacrylamid, Acrylnitril oder Methacrylnitril ist.

6. Grenzflächenaktives Gemisch nach Patentanspruch 1, dadurch gekennzeichnet, dass das Copolymer (a) ein Copolymer aus Maleinsäureanhydrid und Diisobutylen ist.

7. Grenzflächenaktives Gemisch nach einem der Patentansprüche 1 bis 6, dadurch gekennzeichnet, dass das Copolymer (a) eine mittlere molare Masse zwischen 500 und 50 000 hat.

8. Grenzflächenaktives Gemisch nach Patentanspruch 7, dadurch gekennzeichnet, dass das Copolymer (a) eine mittlere molare Masse zwischen 500 und 15 000 hat.

9. Grenzflächenaktives Gemisch nach einem der Patentansprüche 1 bis 8, dadurch gekennzeichnet, dass das Molverhältnis Carbonsäure der Formel (I)/ungesättigte Verbindung der Formel (II) und/oder (III) gleich 1 ist.

10. Grenzflächenaktives Gemisch nach einem der Patentansprüche 1 bis 9, dadurch gekennzeichnet, dass das Tensid (b) eine Verbindung der Formel (IV) oder (V) ist, in denen

— n zwischen 1 und 40 liegt,

— M ein Wasserstoffatom, ein Alkalimetallatom oder ein Ammoniumrest der Formel N ($R_6$ $R_7$ $R_8$ $R_9$) ist, in der $R_6$ ein Wasserstoffatom und $R_7$, $R_8$ und $R_9$ gleich oder verschieden sind und Wasserstoff, Alkyl- oder Hydroxyalkylradikale bedeuten, wobei zwei der Alkylradikale zusammen ein einziges zweiwertiges Radikal bilden können, das eventuell ein Sauerstoffatom enthält; die Gesamtzahl der Kohlenstoffatome des Ammoniumrestes ist dabei kleiner oder gleich 6,

— R für ein Ethylenradikal steht,

— $R_1$ für ein Radikal der Formel (VI), in der m gleich 2 oder 3 ist, $R_4$ ein Wasserstoffatom und $R_3$ ein Radikal der Formel (VII)

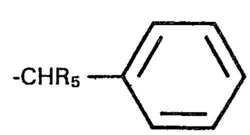
(VII)

in der $R_5$ ein Wasserstoffatom, ein Methyl- oder Phenylradikal bedeutet, und

— $R_2$

. entweder einen Rest der Art von M darstellt, wobei die beiden Reste M gleich sind, wenn $R_2$ = M,

. oder ein Radikal $R_1$ $(O - CH_2 - CH_2)_n$, wobei die Radikale $R_2$ und $R_1$ $(O - CH_2 - CH_2)_n$ gleich sind.

11. Grenzflächenaktives Gemisch nach Patentanspruch 10, dadurch gekennzeichnet, dass das Tensid (b) eine Verbindung der Formel (IV) oder (V) ist, in denen

— n zwischen 3 und 40 liegt,

— M ein Wasserstoff- Natrium- oder Kaliumatom ist oder eine Ammoniumgruppe, eine Ethanolamino-, Diethanolamino- oder Triethanolaminogruppe ist,

— R ein Ethylenradikal,

— $R_1$ ein Radikal der Formel (VI) darstellt, in der m gleich 2 oder 3 ist, $R_4$ ein Wasserstoffatom und $R_3$ ein Radikal der Formel

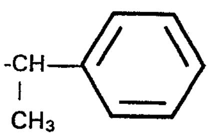

und

— $R_2$

. entweder einen Rest der Art von M bedeutet, wobei die beiden Reste M gleich sind, wenn $R_2$ = M,

. oder ein Radikal $R_1 - (O - CH_2 - CH_2)_n -$, wobei $R_2$ und $R_1 - (O - CH_2 - CH_2)_n -$ gleich sind.

12. Grenzflächenaktives Gemisch nach einem der Patentansprüche 1 bis 11, dadurch gekennzeichnet, dass das Tensid (b) eine der folgenden Substanzen ist: ein Polyoxyethylen-tris(1-phenyl-ethyl)phenolsulfat mit 10 bis 40 Molen Ethylenoxid je Mol Phenol in saurer oder neutralisierter Form, ein Polyoxyethylen-bis(1-phenyl-ethyl)phenolsulfat mit 3 bis 20 Molen Ethylenoxid je Mol Phenol in saurer oder neutralisierter Form, ein Polyoxyethylen-tris(1-phenyl--ethyl)phenolphosphat mit 10 bis 40 Molen Ethylenoxid je Mol Phenol in saurer oder neutralisierter Form, ein Polyoxyethylen-bis(1-phenyl-ethyl)phenolphosphat mit 3 bis 20 Molen Ethylenoxid je Mol Phenol in saurer oder neutralisierter Form.

13. Grenzflächenaktives Gemisch nach einem der Patentansprüche 1 bis 12, dadurch gekennzeichnet, dass es

— 10 bis 90 Gewichtsprozent eines oder mehrerer der Tenside (a),
— 90 bis 10 Gewichtsprozent eines oder mehrerer der Tenside (b) enthält.

14. Grenzflächenaktives Gemisch nach Patentanspruch 13, dadurch gekennzeichnet, dass es

— 10 bis 30 Gewichtsprozent eines oder mehrerer der Tenside (a),
— 70 bis 90 Gewichtsprozent eines oder mehrerer der Tenside (b) enthält.

15. Grenzflächenaktives Gemisch nach Patentanspruch 13, dadurch gekennzeichnet, dass es

— 80 bis 90 Gewichtsprozent eines oder mehrerer der Tenside (a),
— 10 bis 20 Gewichtsprozent eines oder mehrerer der Tenside (b) enthält.

16. Grenzflächenaktives Gemisch nach einem der Patentansprüche 1 bis 15, dadurch gekennzeichnet, dass es flüssig ist.

17. Grenzflächenaktives Gemisch nach einem der Patentansprüche 1 bis 15, dadurch gekennzeichnet, dass es pulverförmig ist.

18. Verfahren zur Herstellung des grenzflächenaktiven Gemisches nach einem der Patentansprüche 1 bis 15 in flüssiger Form, dadurch gekennzeichnet, dass das Tensid (b) erhitzt und mit einer wässrigen Lösung des Tensides (a) gemischt wird.

19. Verfahren nach Patentanspruch 18, dadurch gekennzeichnet, dass eine wässrige Lösung des Tensides (a) in das geschmolzene Tensid (b) eingearbeitet wird, oder umgekehrt.

20. Verfahren zur Herstellung des grenzflächenaktiven Gemisches nach einem der Patentansprüche 1 bis 15 in fester Form, dadurch gekennzeichnet, dass die in Patentanspruch 16 beschriebene Lösung durch Versprühen in einen Luftstrom mit einer Temperatur zwischen 140 und 240°C getrocknet wird.

21. Verfahren zur Herstellung des grenzflächenaktiven Gemisches nach einem der Patentansprüche 1 bis 15 in fester Form, dadurch gekennzeichnet, dass das getrocknete Tensid (a) mit dem durch eine Trägersubstanz absorbierten Tensid (b) gemischt wird.

22. Verwendung des grenzflächenaktiven Gemisches nach einem der Patentansprüche 1 bis 17 zur Formulierung eines oder mehrerer Wirkstoffe.

23. Verwendung nach Patentanspruch 22, dadurch gekennzeichnet, dass der oder die Wirkstoffe Pigmente oder Füllstoffe, Färbemittel, optische Aufheller, Zusätze zu Kunststoffen, Farben, Textilien, Beton oder Kosmetika sind.

24. Verwendung nach Patentanspruch 22, dadurch gekennzeichnet, dass der oder die Wirkstoffe Insektizide, Akarizide, Fungizide, Herbizide, Nematizide, Lockstoffe, Repellents, Rodentizide oder irgendeine andere Art Biozide einzeln oder in einem Gemisch sind.

25. Verwendung nach einem der Patentansprüche 22 bis 24, dadurch gekennzeichnet, dass der oder die Wirkstoffe in Form eines benetzbaren Pulvers formuliert sind.

26. Verwendung nach Patentanspruch 25, dadurch gekennzeichnet, dass das benetzbare Pulver aus

— mindestens einem Wirkstoff,
— mindestens dem grenzflächenaktiven Gemisch nach einem der Patentansprüche 1 bis 17,
— eventuell einem Füllstoff
— und eventuell einem Hilfsstoff

besteht.

27. Verwendung nach Patentanspruch 26, dadurch gekennzeichnet, dass das benetzbare Pulver enthalten kann:

— 10 bis 90% Wirkstoff(e),
— 0,5 bis 20% grenzflächenaktives Gemisch nach einem der Patentansprüche 1 bis 17,
— 9,5 bis 75% Füllstoff(e),
— 0 bis 5% eines oder mehrerer Netzmittel,
— 0 bis 5% Hilfsstoff(e).

28. Verwendung nach einem der Patentansprüche 22 bis 24, dadurch gekennzeichnet, dass der oder die Wirkstoffe in Form von Granulat formuliert sind.

29. Verwendung nach Patentanspruch 28, dadurch gekennzeichnet, dass das Granulat aus

— mindestens einem Wirkstoff,
— mindestens dem grenzflächenaktiven Gemisch nach einem der Patentansprüche 1 bis 17,
— eventuell einem Netzmittel,
— eventuell einem Füllstoff,
— eventuell einem Trennmittel
— und eventuell Hilfsstoffen

besteht.

30. Verwendung nach Patentanspruch 29, dadurch gekennzeichnet, dass das Granulat enthalten kann:

— 10 bis 95% Wirkstoff(e),
— 5 bis 20% grenzflächenaktives Gemisch nach einem der Patentansprüche 1 bis 17,
— 0 bis 75% Füllstoff(e),
— 0 bis 5% eines oder mehrerer Netzmittel,
— 0 bis 5% eines oder mehrerer Trennmittel.

31. Verwendung des grenzflächenaktiven Gemisches nach einem der Patentansprüche 1 bis 17 zur Formulierung eines oder mehrerer Wirkstoffe durch getrennte Anwendung der Tenside (a) und (b) als Pulver oder in flüssiger Form in verschiedenen Stadien der Formulierung, unabhängig davon, ob es sich um benetzbares Pulver oder Granulat handelt.

32. Suspension des oder der Wirkstoffe, die durch Herstellung einer Dispersion des benetzbaren Pulvers oder Granulates nach einem der Patentansprüche 25 bis 31 erhalten wurde.

33. Suspension nach Patentanspruch 32, dadurch gekennzeichnet, dass das Dispersionsmittel Wasser ist.

**Claims**

1. Surface-active composition characterized in that it comprises:

— a surfactant (a) consisting of at least one copolymer obtained from:

an unsaturated carboxylic acid or one of its derivatives of formula (I):

$$R_a - \underset{\underset{R_b}{|}}{C} = CH - COOH \qquad (I)$$

in which

$R_a$ is a hydrogen atom or an alkyl radical containing from 1 to 10 carbon atoms and optionally bearing a -COOH group and

$R_b$ is a hydrogen atom or a -COOH group

and a α-olefinic compound corresponding to the formula (II) and/or a vinyl compound of formula (III):

$$CH_2 = C\genfrac{}{}{0pt}{}{\diagup R_c}{\diagdown R_d} \qquad (II)$$

$$CH_2 = C\genfrac{}{}{0pt}{}{\diagup R_e}{\diagdown R_f} \qquad (III)$$

in which formulae

$R_c$ denotes a hydrogen atom or a linear or branched alkyl radical containing from 1 to 4 carbon atoms

$R_d$ denotes a hydrogen atom, a linear or branched alkyl radical containing from 1 to12 carbon atoms or a linear or branched alkenyl radical containing from 1 to 6 carbon atoms

$R_e$ denotes a hydrogen atom or an alkyl radical containing from 1 to 4 carbon atoms and

$R_f$ denotes one of the following groups

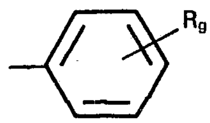

$R_g$ denoting a hydrogen atom or one or more alkyl radicals containing from 1 to 4 carbon atoms

— Cl

— OOC-$R_h$

$R_h$ being an alkyl radical containing from 1 to 8 carbon atoms

— O-$R_i$

$R_i$ having the same meaning as $R_h$

— COOH

— COO-$R_j$

$R_j$ having the same meaning as $R_h$

— CO-$NH_2$

— C≡N

— Cl when $R_e$ is a hydrogen atom, the molar ratio unsaturated carboxylic acid of formula (I)/unsaturated compounds of formula (II) and/or (III) being close to 1

— a surfactant (b) consisting of at least one mixed sulphate of formula (IV) and/or a phosphoric ester of formula (V):

$$R_1 \text{-}\!\!\left[ O - R \right]_n\!\!\text{-}\; O\,SO_3\,M \qquad (IV)$$

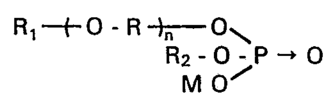

(V)

in which formulae

— n is between 1 and 80

— M is a residue of inorganic or organic origin chosen so as to have the desired solubility or a hydrogen atom

— R is an alkylene radical containing from 2 to 4 carbon atoms

— $R_2$ is:

either a residue M: it being possible for the two residues M (when $R_2$ = M) to be identical or different

or one of the radicals $R_1\text{-}[O - R]_n\text{-}$ : it being possible for the radicals $R_2$ and $R_1\text{-}[O - R]_n\text{-}$ to be identical or different, and

— $R_1$ denotes one of the radicals symbolized by the formula (VI):

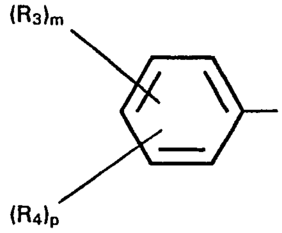

(VI)

in formula (VI), m is an integer equal to 1, 2, 3; p is an integer equal to 1 or 2; $R_4$ denotes a hydrogen atom or an alkyl radical containing from 1 to 4 carbon atoms and the radical $R_3$ symbolizes a radical of formula (VII):

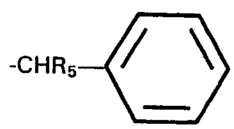

(VII)

in which

$R_5$ denotes a hydrogen atom, an alkyl radical containing from 1 to 4 carbon atoms or a phenyl radical.

2. Surface-active composition according to Claim 1, characterized in that the carboxylic acid or derivative forming part of the composition of the copolymer (a) is maleic acid or fumaric acid or their esters or hemiesters; itaconic acid, citraconic acid; maleic anhydride; mono- and di-alkyl maleic acids and mono- and di-alkylfumaric acids: the alkyl radical containing from 1 to 4 carbon atoms.

3. Surface-active composition according to either of Claims 1 and 2, characterized in that the α-olefinic compound forming part of the composition of the copolymer (a) is an unsaturated hydrocarbon with a straight or branched chain containing from 2 to 8 carbon atoms.

4. Surface-active composition according to Claim 3, characterized in that the α-olefinic compound is ethylene, propylene, 1-butene, isobutylene, n-1-pentene, isoprene, 2-methyl-1-butene, n-1-hexene, 2-methyl-1-pentene, 4-methyl-1-pentene, 2-ethyl--1-butene, diisobutylene, 1,3-butadiene, 1,3-pentadiene, 1,3-hexadiene, 1,3-octadiene, 2-methyl-3,3--dimethyl-1-pentene, or 2-methyl-4,4-dimethyl-pentene.

5. Surface-active composition according to one of Claims 1 to 4, characterized in that the vinyl compound forming part of the composition of the copolymer (a) is styrene, vinyl chloride, vinyl esters of aliphatic acids containing from 1 to 8 carbon atoms, vinyl ethers, acrylic or methacrylic acid and their $C_1$-$C_8$ alkyl esters, acrylamide, methacrylamide, acrylonitrile or methacrylonitrile.

6. Surface-active composition according to Claim 1, characterized in that the copolymer (a) is a maleic anhydride-diisobutylene copolymer.

7. Surface-active composition according to one of Claims 1 to 6, characterized in that the copolymer (a) has a weight-average molecular mass of between 500 and 50,000.

8. Surface-active composition according to Claim 7, characterized in that the copolymer (a) has a weight-average molecular mass of between 500 and 15,000.

9. Surface-active composition according to one of Claims 1 to 8, characterized in that the molar ratio carboxylic acid of formula (I)/unsaturated compounds of formula (II) and/or (III) is equal to 1.

10. Surface-active composition according to one of Claims 1 to 9, characterized in that the surfactant (b) is a compound of formula (IV) or (V) in which formulae

— n is between 1 and 40

— M is a hydrogen atom, an alkali metal atom or an ammonium residue of formula N ($R_6$ $R_7$ $R_8$ $R_9$) in which $R_6$ is a hydrogen atom and $R_7$, $R_8$ and $R_9$, which are identical or different, denote hydrogen, alkyl radicals of hydroxyalkyl radicals it being possible for two of the alkyl radicals to form together a single divalent radical optionally containing an oxygen atom: the total number of carbon atoms in the ammonium residue being lower than or equal to 6

— R denotes an ethylene radical

— $R_1$ denotes a radical of formula (VI) in which m is a number equal to 2 or 3; $R_4$ is a hydrogen atom; the radical $R_3$ a radical of formula (VII)

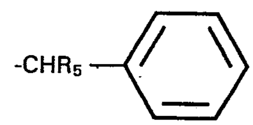

(VII)

in which

— $R_5$ symbolizes a hydrogen atom, a methyl or phenyl radical and

— $R_2$ is:

either a residue M: the two residues M being identical when $R_2$ = M

or a radical $R_1-(O-CH_2-CH_2)_n-$ : the radicals $R_2$ and $R_1-(O-CH_2-CH_2)_n-$ being identical.

11. Surface-active composition according to Claim 10, characterized in that the surfactant (b) is a compound of formula (IV) or (V) in which formulae

— n is between 3 and 40

— M is a hydrogen, sodium or potassium atom, an ammonium radical, a monoethanolamine, a diethanolamine or a triethanolammine

— R is an ethylene radical

— $R_1$ denotes a radical of formula (VI) in which m is a number equal to 2 or 3; $R_4$ is a hydrogen atom; the radical $R_3$ is a radical of formula:

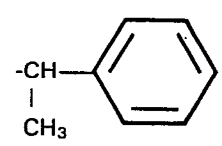

and

— $R_2$ is

either a residue M: the two residues M being identical when $R_2$ = M

or a radical $R_1-(O-CH_2-CH_2)_n-$: the radicals $R_2$ and $R_1-(O-CH_2-CH_2)_n-$ being identical;.

12. Surface-active composition according to one of Claims 1 to 11, characterized in that the surfactant (b) is chosen from: the sulphates of polyoxyethylenated tri(1-phenylethyl)phenols containing 10 to 40 mol of ethylene oxide per mol of phenol in acidic or neutralized form, sulphates of polyoxyethylenated di(1-phenyl-ethyl)phenols containing 3 to 20 mol of ethylene oxyde per mol of phenol in acidic or neutralized form, phosphates of polyoxyethylenated tri(1-phenylethyl)phenols containing 10 to 40 mol of ethylene oxide per mol of phenol in acidic or neutralized form, and phosphates of polyoxyethylenated di(1-phenylethyl)phenols containing 3 to 20 mol of ethylene oxide per mol of phenol in acidic or neutralized form.

13. Surface-active composition according to one of Claims 1 to 12, characterized in that it contains from

- from 10 to 90% by weight of one or more sufactants (a)
- from 90 to 10% by weight of one or more sufactants (b).

14. Surface-active composition according to Claim 13, characterized in that it contains

- from 10 to 30% by weight of one or more sufactants (a)
- from 70 to 90% by weight of one or more sufactants (b).

14. Surface-active composition according to Claim 13, characterized in that it contains

- from 80 to 90% by weight of one or more sufactants (a)
- from 10 to 20% by weight of one or more sufactants (b).

16. Surface-active composition according to one of Claims 1 to 15, characterized in that it is in a liquid form.

17. Surface-active composition according to one of Claims 1 to 15, characterized in that it is in a powder form.

18. Process for the preparation of the surface-active composition described in one of Claims 1 to 15, in a liquid form, characterized in that it consists in heating the surfactant (b) and mixing the surfactant (b) and the aqueous solution of the surfactant (a).

19. Process according to Claim 18, characterized in that the aqueous solution of surfactant (a) is introduced into the molten surfactant (b) or vice versa.

20. Process for the preparation of the surface-active composition described in one of Claims 1 to 15 in a solid form, characterized in that it consists in drying the solution described in Claim 16 by spraying into a stream of air whose temperature is between 140-240°C.

21. Process for the preparation of the surface-active composition described in one of Claims 1 to 15 in a solid form, characterized in that it consists in mixing the dried surfactant (a) with the surfactant (b) adsorbed on a support.

22. Use of the surface-active composition described in one of Claims 1 to 17 in the formulation of active substance(s).

23. Use according to Claim 22, characterized in that the active substance(s) are pigments of fillers, colouring agents, optical whiteners, plastics additives, paints, textiles, concrete or cosmetics.

24. Use according to Claim 22, characterized in that the active substance(s) are insecticides, acaricides, fungicides, herbicides, nematocides, attractants, repellents, rodenticides or any other biocide by itself or in a mixture.

25. Use according to one of Claims 22 to 24, characterized in that the active substance(s) are formulated in the form of a wettable powder.

26. Use according to Claim 25, characterized in that the wettable powder consists of:

- at least one active substance
- at least the surface-active composition described in one of Claims 1 to 17
- if desired, a filler
- and, if desired, auxiliary products.

27. Use according to Claim 26, characterized in that the wettable powder may contain:

- from 10 to 90% of active substance(s)
- from 0.5 to 20% of the surface-active composition described in one of Claims 1 to 17,
- from 9.5 to 75% of filler(s)
- from 0 to 5% of wetting agent(s) and
- from 0 to 5% of auxiliary product(s).

28. Use according to one of Claims 22 to 24, characterized in that the active substance(s) are formulated in the form of granules.

29. Use according to Claim 28, characterized in that the granules consist of:

- at least one active substance
- at least the surface-active composition described in one of Claims 1 to 17
- if desired, a wetting agent
- if desired, a filler
- if desired, a disintegrating agent
- and, if desired, auxiliary products.

30. Use according to Claim 29, characterized in that the granules may contain:

- from 10 to 95% of active substance(s)
- from 5 to 20% of the surface-active composition described in one of Claims 1 to 17,
- from 0 to 75% of filler(s)
- from 0 to 5% of wetting agent(s) and
- from 0 to 5% of disintegrating agent(s).

31. Use of the surface-active composition described in one of Claims 1 to 17, in the formulation of active substance(s) by separately using the surfactant (a) and the surfactant (b) in powder or liquid form, at different stages of the formulation whether it be in wettable powder or granular form.

32. Suspension of the active substance(s) which is obtained by dispersing the wettable powder or the granules described in one of Claims 25 to 31.

33. Suspension according to Claim 32, characterized in that the dispersion medium is water.